# EUROPÄISCHE PATENTSCHRIFT

(11) **EP 2 341 119 B1**
(45) Veröffentlichungstag und Bekanntmachung des Hinweises auf die Patenterteilung: **18.09.2013**
(21) Anmeldenummer: 10195579.7
(22) Anmeldetag: 17.12.2010
(51) Int. Cl.: C10B 49/14, C10B 53/02, C10L 9/00, C10L 9/08, F28D 7/00

(54) **Verfahren und Vorrichtung zum Temperieren einer exothermen Reaktion**
Method and device for tempering an exothermic reaction
Procédé et dispositif de thermorégulation d'une réaction exothermique

(30) Priorität: 18.12.2009 DE 102009055026
(43) Veröffentlichungstag der Anmeldung: 06.07.2011
(73) Patentinhaber: Heete, Lars Christian, 46240 Bottrop (DE)
(72) Erfinder: Heete, Lars Christian, 46240 Bottrop (DE)
(74) Vertreter: Patentanwälte Bals & Vogel

(56) Entgegenhaltungen:
- EP-A1- 0 588 004
- EP-A1- 1 970 431
- DE-A1-102008 007 791
- US-A- 2 846 421
- US-A1- 2001 033 961

## Beschreibung

Die Erfindung betrifft ein Verfahren zum Temperieren einer exothermen Reaktion, insbesondere mindestens einer Teilreaktion einer hydrothermalen Karbonisierung, wobei die exotherme Reaktion in einem Reaktionsbehältnis durchgeführt wird, und wobei die exotherme Reaktion durch mindestens eine Temperiersubstanz zumindest teilweise temperiert wird, wobei Wärme zwischen der Temperiersubstanz und mindestens einer von der Temperiersubstanz stofflich getrennten Temperierflüssigkeit austauschbar ist, gemäß des Oberbegriffs des Anspruchs 1. Ferner betrifft die Erfindung eine Temperiervorrichtung gemäß des Oberbegriffs des unabhängigen Anspruchs 5 sowie eine Karbonisierungsanlage gemäß dem Anspruch 13.

Häufig ist es notwendig, exotherme Reaktionen bei einer bestimmten eng begrenzten Reaktionstemperatur ablaufen zu lassen, um bestimmte Reaktionsprodukte in gewünschter Ausbeute zu erhalten, Druckveränderungen zu vermeiden und/oder Nebenreaktionen zu unterbinden.

Ein gutes Beispiel einer solchen exothermen Reaktion ist die hydrothermale Karbonisierung oder zumindest eine Teilreaktion der hydrothermalen Karbonisierung. Unter hydrothermale Karbonisierung ist hierbei eine Umwandlung von nasser Biomasse unter Luftausschluss in ein oder mehrere Produkte mit einem erhöhten Kohlenstoffanteil, z.B. Kohle, Humus, Torf, ÖI und/oder Hydroxymethylfurfural, und/oder Maillard ähnliche Reaktionsprodukte zu verstehen. Die hydrothermale Karbonisierung dauert üblicherweise mehrere Stunden bis mehrere Tage. Eine gattungsgemäße hydrothermale Karbonisierung wird in der Druckschrift WO 2008/081408 offenbart. In dieser Schrift werden Beispiele für Ausgangs- und Endprodukte, Katalysatoren, Verfahrensschritte, Reaktionsbedingungen, Aufbereitungsschritte, Reaktortypen, Oberflächenbeschaffenheiten von Reaktoren offenbart, die soweit nicht anders beschrieben, hier ebenfalls eingesetzt werden können und zum Offenbarungsgehalt dieser Schrift zählen.

Bei der Biomasse kann es sich z.B. um landwirtschaftliche Erzeugnisse oder Abfälle, Fäkalien, Garten-oder kompostierbaren Haushaltsabfall handeln. Üblicherweise wird die Biomasse zunächst vorbehandelt, wobei die Biomasse insbesondere zerkleinert, in Wasser aufgeschlämmt und mit einem Katalysator versetzt werden kann. Danach wird die so erhaltene Prozessmasse auf eine gewünschte Reaktionstemperatur, die zwischen 160°C und 300°C liegen kann, isochor in einem Reaktionsbehältnis erhitzt, wobei sich der Druck auf ca. 2 MPa im Falle einer Reaktionstemperatur von 200 °C erhöht. Hierbei werden Druck, Volumen und Temperatur so gewählt, dass das Wasser in der nassen Biomasse überwiegend flüssig bleibt.

Der Prozess der hydrothermalen Karbonisierung ist noch nicht wissenschaftlich vollständig verstanden. Es sind speziell für Kohlehydrate drei verschiedene Teilreaktionen bekannt, die sich zeitlich teilweise überschneiden. Hierbei handelt es sich um eine endotherme Hydrolyse, welche für Cellulose bei Temperaturen über 200°C in wässriger Umgebung einsetzt und innerhalb von wenigen Sekunden vollzogen sein kann, eine relativ kurze stark exotherme Dehydratatisierung und/oder Decarboxylierung (ab einer Temperatur von 200°C), und eine lang andauernde schwach exotherme Kondensreaktion, an dessen Ende der Kohlenstoff ausfällt. Es kann daher sein, dass der Prozess zunächst schwach endotherm ist, und dann exotherm wird. Alternativ kann der Prozess zunächst stark exotherm sein. Dies ist u. a. von der eingesetzten nassen Biomasse abhängig. Durch die Inhomogenität, der schlechten Wärmeleitfähigkeit und/oder der schlechten Konvektion der verwendeten Biomasse kann es insbesondere bei der stark exothermen Reaktion zu lokalen Temperaturspitzen kommen, wodurch das Wasser in der Prozessmasse verdampfen kann. Hierdurch wird die Wärmeleitfähigkeit weiter verringert und der Druck erhöht, so dass das Reaktionsbehältnis beschädigt werden oder sogar explodieren kann. Nach der stark exothermen Reaktion verläuft der Prozess schwach exotherm. Weiterhin ist bekannt, dass die Reaktionstemperatur und die Dauer, mit der die Prozessmasse im Reaktionsbehältnis verbleibt, einen starken Einfluss auf die Produkte der hydrothermalen Karbonisierung haben. So können bei zu hohen Reaktionstemperaturen unerwünschterweise z.B. Teer oder organische Aromaten entstehen. Daher ist ein Konstanthalten der Reaktionstemperatur zur Erhalt der gewünschten Produkte und zur Vermeidung von Explosionen notwendig. Weiterhin ist es notwendig, die Prozessmasse vor Beginn der Reaktion auf die Reaktionstemperatur zu erhitzen, wodurch die Energiebilanz und die Wirtschaftlichkeit des Prozesses verschlechtert werden.

Die Schrift DE 10 2008 007 791 A1 offenbart eine Vorrichtung und ein Verfahren zur hydrothermalen Karbonisierung, bei der ein Prozessbehälter von einem Kühlmittelbehälter umgeben ist. Hierbei wird ein Kühlmedium in dem Kühlmittelbehälter so gewählt, dass der Siedepunkt des Kühlmediums im Bereich der angestrebten Prozesstemperatur liegt. Das Kühlmedium wird von einer Pumpe in einem Primärkühlkreislauf befördert. Es ist ein Sekundärkühlkreislauf vorgesehen, an den das Kühlmedium seine Wärme abgibt. Eine Umwandlung eines bedeutenden Anteils des Kühlmediums in die gasförmige Phase ist aber nicht vorgesehen und auch aus Platzgründen schwer zu realisieren. Zudem ist eine mögliche Beibehaltung der gasförmigen Phase zur Speicherung von Wärme nicht vorgesehen und unpraktikabel. Das Kühlmedium in der gasförmigen Phase kann außerdem das flüssige Kühlmedium in der Nähe des Reaktionsbehältnisses verdrängen und somit auf Grund der schlechten Wärmeleitfähigkeit isolierend wirken und eine Kühlung unterbinden. Somit kann das Kühlmedium trotz einer Reaktionstemperatur im Bereich seiner Siedetemperatur keinen unmittelbaren Beitrag zum Konstanthalten der Reaktionstemperatur noch zur Wärmespeicherung leisten. Vielmehr wird die Wärme im Wesentlichen in den Sekundarkühlkreis überführt und dort gespeichert.

Es ist daher Aufgabe der vorliegenden Erfindung ein Verfahren und eine Vorrichtung für eine exotherme Reaktion, insbesondere für eine hydrothermale Karbonisierung oder für zumindest eine Teilreaktion der hydrothermalen Karbonisierung zur Verfügung zu stellen, mit der die exotherme Reaktion wirksam auf einfache Art und Weise temperiert werden kann. Hierbei soll insbesondere während der Reaktion Temperaturspitzen wirksam vermieden werden und die Reaktionstemperatur konstant gehalten werden. Zur Lösung der Aufgabe wird ein Verfahren mit den Merkmalen des Anspruches 1, insbesondere des kennzeichnenden Teils, vorgeschlagen. Vorteilhafte Weiterbildungen des Verfahrens sind in den abhängigen Verfahrensansprüchen angegeben. Die Aufgabe wird weiterhin gelöst durch eine Temperiervorrichtung des unabhängigen Anspruchs 5, insbesondere des kennzeichnenden Teils. Vorteilhafte Weiterbildungen der Temperiervorrichtung sind in den abhängigen Vorrichtungsansprüchen angegeben. Weiterhin wird eine Karbonisierungsanlage mit einer erfindungsgemäßen Temperiervorrichtung in Anspruch 13 unter Schutz gestellt. Vorteilhafte Weiterbildungen der Karbonisierungsanlage sind in den abhängigen Ansprüchen 14 und 15 angegeben. Merkmale und Details, die im Zusammenhang mit dem erfindungsgemäßen Verfahren beschrieben sind, gelten dabei selbstverständlich auch im Zusammenhang mit der erfindungsgemäßen Temperiervorrichtung und/oder Karbonisierungsanlage und umgekehrt. Dabei können die in den Ansprüchen und in der Beschreibung erwähnten Merkmale jeweils einzeln für sich oder in Kombination erfindungswesentlich sein.

Erfindungsgemäß ist bei dem Verfahren vorgesehen, dass bei einem Übergang von Wärme zwischen dem Reaktionsbehältnis und der Temperiersubstanz die Temperiersubstanz zumindest teilweise einen Phasenübergang zwischen einer festen und einer flüssigen Phase der Temperiersubstanz vollführt. Hierdurch kann auf eine aufwendige Steuerung und/oder Regelung zum Konstanthalten der Temperatur verzichtet werden.

In einem Reaktionsbehältnis wird die exotherme Reaktion durchgeführt. Hierbei soll eine Reaktionstemperatur möglichst genau eingehalten werden. Um diesen Zweck zu erreichen, ist an dem Reaktionsbehältnis eine Temperiersubstanz angeordnet, die die Reaktionswärme der exothermen Reaktion aufnehmen soll. Bevorzugt grenzt die Temperiersubstanz hierbei direkt an das Reaktionsbehältnis. Alternativ soll die Temperiersubstanz im Falle von Inhomogenitäten, im Falle einer schwach exothermen Reaktion, bei der der Wärmeverlust über das Reaktionsbehältnis größer als die Reaktionswärme ist, und/oder vor dem Beginn der exothermen Reaktion dem Reaktionsbehältnis Wärme zuführen.

Um die Reaktionstemperatur möglichst genau einhalten zu können, wird erfindungsgemäß eine Temperiersubstanz gewählt, deren Schmelzpunkt im Bereich der Reaktionstemperatur liegt. Die vorliegende Erfindung macht sich hierbei zu Nutze, dass im Allgemeinen bei einem Phasenübergang von einer festen zu einer flüssigen Phase einer Substanz eine große spezifische Schmelzwärme benötigt wird, die umgekehrt bei dem Übergang von der flüssigen zur festen Phase wieder frei wird. Das heißt, dass die betrachtete Substanz beim Schmelzen viel Wärme aufnehmen und speichern kann. Hierbei beträgt die spezifische Schmelzwärme üblicherweise zwischen 1 kJ/mol bis 50 kJ/mol.

Wird eine reine Substanz oder eine eutektische Mischung als Temperiersubstanz gewählt, so bleibt die Temperatur der Temperiersubstanz konstant, solange der Phasenübergang noch nicht abgeschlossen ist, d.h. die Substanz sowohl in fester als auch in flüssiger Form vorliegt. Daraus ergibt sich, dass trotz der aufgenommenen oder abgegebenen Wärme die Temperiersubstanz während des Phasenübergangs vorteilhafterweise ihre Temperatur beibehält, so dass auch das Reaktionsbehältnis in einer konstanten Temperaturumgebung befindet. Wird als Temperiersubstanz eine nicht eutektische Mischung gewählt, so kann im Vorfeld ein gewünschter Reaktionstemperaturverlauf festgelegt werden. Im Weiteren wird davon ausgegangen, dass eine Temperiersubstanz mit einem konstanten Schmelzpunkt gewählt wird. Schmelzpunktänderungen durch sich ändernde Drücke im Temperierbehältnis werden im Folgenden als vernachlässigbar angesehen und nicht weiter betrachtet. Auch können die Drücke im Temperierbehältnis durch einen Druckausgleich zu der Umgebung oder zu einem weiteren Behälter oder Behältnis weitgehend konstant gehalten werden.

Ein weiterer Vorteil einer Temperiersubstanz, die beim Temperieren teilweise schmilzt oder erstarrt, ist, dass die Volumenänderung beim Schmelzen/Erstarren im Vergleich zur Volumenänderung beim Verdampfen/Kondensieren gering ist, so dass ein Temperierbehältnis, in dem die Temperiersubstanz angeordnet ist, mit einem zumindest relativ starren Volumen gewählt werden kann, ohne große Druckschwankungen befürchten zu müssen.

Außerdem weisen sowohl die feste als auch die flüssige Phase der Temperiersubstanz im Vergleich zu einem Gas eine höhere Wärmeleitfähigkeit auf. Auch gibt es durch den Phasenübergang von fest zu flüssig eine Zunahme der Wärmeübertragung, da in der flüssige Phase der Temperiersubstanz Konvektion möglich ist. Auch kann in der flüssigen Phase aufgrund einer erhöhten Transparenz die Übertragung durch Transmission ebenfalls größer als in der festen Phase sein. Insbesondere durch die flüssige Phase der Temperiersubstanz, die sich in der Nähe des Reaktionsbehältnisses befindet, kann daher die Wärme des Reaktionsbehältnisses abgeführt werden.

Erfindungsgemäß ist somit denkbar, dass die Temperiersubstanz bei Aufnahme von Reaktionswärme der exothermen Reaktion teilweise schmilzt. In diesem Fall übernimmt die Temperiersubstanz die Aufgabe einer konventionellen Kühlung. Zusätzlich oder alternativ kann die in der flüssigen Temperiersubstanz enthaltene Schmelzwärme dazu verwendet werden, dem Reaktionsbehältnis Wärme zuzuführen, wobei die Temperiersubstanz teilweise erstarrt. Hierbei ist insbesondere denkbar, zumindest ein Edukt der exothermen Reaktion durch die in der flüssigen Temperiersubstanz gespeicherten Schmelzwärme vor Beginn der exothermen Reaktion zu erwärmen, Inhomogenitäten auszugleichen oder im Falle einer nur schwach exothermen Reaktion einen Wärmeverlust auszugleichen. In diesem Fall übernimmt die Temperiersubstanz die Aufgabe einer konventionellen Heizung. Sowohl beim Erstarren als auch beim Schmelzen kann die Temperiersubstanz ohne große Druckänderungen, die im Vergleich zu einem Phasenübergang flüssig/gasförmig auftreten würden, in einem konstanten Volumen angeordnet sein. Zudem bleibt beim Erstarren als auch beim Schmelzen die Temperiersubstanz auf einer konstanten Temperatur, so dass auch das Reaktionsbehältnis in etwa auf einer konstanten Temperatur gehalten wird. Die erfindungsgemäße Temperiersubstanz dient damit gleichzeitig als Wärmepuffer für Temperaturspitzen der exothermen Reaktion und Wärmespeicher bei in etwa konstanter Temperatur.

Eine Temperiervorrichtung, in der das erfindungsgemäße Verfahren durchführbar ist und die zum Temperieren einer exothermen Reaktion, insbesondere zumindest einer Teilreaktion einer hydrothermalen Karbonisierung, dient, weist mindestens ein Temperierbehältnis, in dem mindestens eine Temperiersubstanz angeordnet ist, und ein Reaktionsbehältnis, in dem die exotherme Reaktion bei einer Reaktionstemperatur durchführbar ist und dessen Ausgestaltung ebenfalls für die Temperierung der exothermen Reaktion maßgeblich ist, auf. Das Temperierbehältnis grenzt an das Reaktionsbehältnis.

Hierbei ist der Schmelzpunkt der Temperiesubstanz so gewählt, dass er im Bereich der Reaktionstemperatur liegt.

Im Falle einer hydrothermalen Karbonisierung ist eine Temperiersubstanz, die beim Temperieren schmilzt oder erstarrt, besonders vorteilhaft, da abhängig von dem verwendeten Biomasse eine Prozessmasse stark inhomogen sein kann, so dass an einigen Stellen des Reaktionsbehältnisses viel Reaktionswärme abgeführt werden muss, während an anderen Stellen oder zu einer anderen Zeit eventuell Wärme zugeführt werden muss. Als Prozessmasse wird hierbei im Weiteren eine sich der exothermen Reaktion unterziehende Reaktionsmischung im Reaktionsbehältnis verstanden. Im Falle der hydrothermalen Karbonisierung bedeutet das, dass die Prozessmasse zu Beginn der Reaktion der eingesetzten nassen Biomasse und zum Ende der hydrothermalen Karbonisierung die Prozessmasse dem gewünschten Reaktionsprodukt, weiteren Nebenprodukten und Wasser entspricht.

Durch die erfindungsgemäße Temperiersubstanz kann die Reaktionstemperatur der hydrothermalen Karbonisierung im besonderen Maße eingehalten werden, ohne dass das Wasser der Prozessmasse verdampft und es so zu einer starken Druckerhöhung im Reaktionsbehältnis kommt. Hierdurch wird die Sicherheit der hydrothermalen Karbonisierung im hohen Maße gewährleistet. Durch das Einhalten der gewünschten Prozesstemperatur kann zudem der Erhalt des gewünschten Reaktionsproduktes gewährleistet werden.

Weiterhin eignet sich das erfindungsgemäße Verfahren im besonderen Maße für kleine, diskontinuierlich und/oder mit Unterbrechungen betriebene Karbonisierungsanlagen für eine hydrothermale Karbonisierung, wie sie in einem Haushalt, z.B. für die Verwertung von Bioabfall (Kaffee, Tee etc.), Grasschnitt und/oder Laub, denkbar sind. Hierbei ist es energetisch vorteilhaft, dass die erfindungsgemäße Temperiersubstanz auf Grund der hohen spezifischen Schmelzwärme eine große Wärmemenge speichern und zum Erwärmen der Prozessmasse bei einem erneuten Betrieb der Karbonisierungsanlage zur Verfügung stellen kann. Hierbei wirkt sich eine nach außen erstarrende Schicht der Temperiersubstanz zusätzlich isolierend aus.

Damit die Temperiersubstanz während der exothermen Reaktion vorzugsweise immer sowohl in der flüssigen als auch in der festen Phase vorliegt und somit die Temperatur der Temperiersubstanz konstant bleibt, ist es im Falle einer kontinuierlichen und/oder dauerhaften Reaktionsführung notwendig, evtl. vorhandene überschüssige Wärme aus der Temperiersubstanz zu entfernen. Daher steht die Temperiersubstanz in einem thermischen Kontakt mit mindestens einer stofflich von der Temperiersubstanz getrennten Temperierflüssigkeit, die Wärme aus der Temperiersubstanz aufnehmen kann. Zusätzlich oder alternativ kann es vorgesehen sein, dass die Temperierflüssigkeit Wärme an die Temperiersubstanz abgeben kann, z.B. bei einem ersten Start der exothermen Reaktion, um zumindest ein Edukt zu erwärmen. Somit dient die Temperierflüssigkeit ebenfalls zur Temperierung der exothermen Reaktion. Die Temperiervorrichtung weist daher noch mindestens ein Flüssigkeitsbehältnis im thermischen Kontakt mit der Temperiersubstanz für die Temperierflüssigkeit auf. Als thermischer Kontakt wird die Möglichkeit bezeichnet, Wärme über gut wärmeleitende Flächen und/oder Wände auszutauschen. Das Flüssigkeitsbehältnis grenzt demnach an das Temperierbehältnis an. Es können auch mehrere Flüssigkeitsbehältnisse vorhanden sein, die mehrere Temperierflüssigkeiten stofflich voneinander trennen. Hierbei können unterschiedliche Substanzen als Temperierflüssigkeiten eingesetzt werden oder die gleiche Substanz als Temperierflüssigkeit jedoch auf unterschiedlichen Druck- und/oder Temperaturniveaus eingesetzt werden. Die Temperierflüssigkeit kann teilweise in der dampfförmigen Phase in dem Flüssigkeitsbehältnis vorliegen.

Das Flüssigkeitsbehältnis, das Temperierbehältnis und das Reaktionsbehältnis können jeweils gemeinsame Wände aufweisen. Insbesondere kann ein Angrenzen bedeuten, dass die Temperiersubstanz über nur eine gemeinsame Wand von der Prozessmasse oder der Temperierflüssigkeit getrennt ist, um einen Wärmeaustausch zu erleichtern. Die gemeinsame Wand ist dann entsprechend sowohl dem Temperierbehältnis und dem Reaktionsbehältnis oder sowohl dem Temperierbehältnis als auch dem Flüssigkeitsbehältnis zuzuordnen. Das Reaktionsbehältnis, das Temperierbehältnis und/oder das Flüssigkeitsbehältnis können aus gut wärmeleitenden Materialien wie Aluminium, Kupfer, Messing, Graphit oder Edelstahl hergestellt sein.

Dadurch, dass die Temperiersubstanz Reaktionswärme aufnimmt und dabei teilweise schmilzt, ist eine schnelle zeitliche Anpassung der Temperierflüssigkeit an eventuelle Temperaturspitzen der Prozessmasse nicht notwendig. Somit ist eine stabile Steuer- oder Regelung für die Temperierflüssigkeit einfach zu verwirklichen. Ein hohes Verhältnis von Temperiersubstanz zu Prozessmasse erleichtert hierbei die Steuerung oder Regelung zusätzlich.

Die Temperierflüssigkeit kann sowohl in thermischen Kontakt mit der Temperiersubstanz als auch direkt in thermischen Kontakt mit dem Reaktionsbehältnis stehen. Vorzugsweise ist jedoch vorgesehen, dass sich die Temperiersubstanz überall zwischen der Temperierflüssigkeit und dem Reaktionsbehältnis befindet, d.h. dass ein Wärmeübergang zwischen der Prozessmasse und der Temperierflüssigkeit nur oder im Wesentlichen über die Temperiersubstanz möglich ist. Ebenfalls kann vorgesehen sein, dass überall zwischen dem Flüssigkeitsbehältnis und dem Reaktionsbehältnis sich ein Temperierbehältnis befindet.

Wird der Temperiersubstanz im Temperierbehältnis auf der einen Seite Wärme aus dem Reaktionsbehältnis zugeführt, und auf der anderen Seite des Temperierbehältnisses der Temperiersubstanz über das Flüssigkeitsbehältnis Wärme entnommen, so ist es denkbar, dass in der Temperiersubstanz eine Phasengrenze fest/flüssig ausgebildet ist. Hierbei kann sich die feste Phase der Temperiersubstanz, die im Vergleich zu der flüssigen Phase der Temperiersubstanz Wärme schlechter überträgt, an einer an das Flüssigkeitsbehältnis angrenzenden Wand des Temperierbehältnisses befinden. Eine relativ gut wärmeübertragende flüssige Phase der Temperiersubstanz kann an einer an das Reaktionsbehältnis angrenzende Wand des Temperierbehältnisses ausbildet sein.

In diesem bevorzugten Fall ist Folgendes denkbar. Wird mehr Wärme der Temperiersubstanz aus dem Reaktionsbehältnis zugeführt als Wärme aus der Temperiersubstanz an das Flüssigkeitsbehältnis abgegeben wird, so schmilzt Temperiersubstanz an der Phasengrenze fest/flüssig. Die Schichtdicke der schlechter wärmeübertragenden, festen Phase der Temperiersubstanz nimmt ab, wodurch ein größerer Wärmeabfluss aus der Temperiersubstanz in die Temperierflüssigkeit erreicht wird. Wird hingegen weniger Wärme der Temperiersubstanz aus dem Reaktionsbehältnis zugeführt als Wärme aus der Temperiersubstanz an das Flüssigkeitsbehältnis abgegeben wird, so erstarrt Temperiersubstanz an der Phasengrenze und eine Schichtdicke der schlecht wärmeübertragenden festen Phase der Temperiersubstanz an dem Flüssigkeitsbehältnis nimmt zu, wodurch sich der Wärmeabfluss aus der Temperiersubstanz in die Temperierflüssigkeit im Vergleich zu vorher verringert. Hierdurch kann erreicht werden, dass sich der Wärmeabfluss aus der Temperiersubstanz in die Temperierflüssigkeit auch über einen relativ großen Temperaturgradienten weitgehend selbstständig und lokal der Produktion überschüssiger Wärme der Prozessmasse im Reaktionsbehältnis anpassen kann. Hierdurch kann auch bei linear oder mehrstufig geführten kontinuierlichen Prozessen auf eine örtliche Regelung der Temperierflüssigkeit weitgehend verzichtet werden.

Auch können die Volumenänderungen der Temperiersubstanz vorteilhafterweise ausgenutzt werden. Hierbei kann es sich insbesondere um Volumenänderungen zwischen 10 und 30 % handeln, um die sich das Volumen der Temperiersubstanz beim Schmelzen vergrößert. Hierzu kann sich ein Gas, insbesondere ein schlecht wärmeleitendes Inertgas, in dem Temperierbehältnis befinden, die eine Volumenänderung der Temperiersubstanz beim Schmelzen ohne oder mit nur einem geringen Druckanstieg im Temperierbehältnis ermöglicht. Diese Volumenänderung kann bei geeigneter Geometrie des Temperierbehältnisses genutzt werden, die für die Wärmeübertragung relevante Oberfläche der flüssigen Phase der Temperiersubstanz, insbesondere die Fläche, mit der die flüssige Phase der Temperiersubstanz an das Reaktionsbehältnis grenzt und/oder die Phasengrenze fest/flüssig der Temperiersubstanz innerhalb des Temperierbehältnisses, vorteilhaft mit zunehmenden Volumen der flüssigen Phase der Temperiersubstanz zu vergrößern, bzw. bei abnehmenden Volumen zu verkleinern. Hierdurch kann erreicht werden, dass der Wärmeübergang zwischen dem Reaktionsbehältnis und der Temperiersubstanz und/oder zwischen der flüssigen und der festen Phase der Temperiersubstanz bei einer zunehmenden Schmelze der Temperiersubstanz zunimmt.

Die Temperiersubstanz kann einen Schmelzpunkt möglichst genau im Bereich der angestrebten Reaktionstemperatur aufweisen. Da für die Wärmeübertragung zwischen der Prozessmasse und der Temperiersubstanz ein Temperaturgradient nötig ist, kann die Temperiersubstanz einen Schmelzpunkt leicht unterhalb der Reaktionstemperatur aufweisen. Insbesondere ist es denkbar, dass der Schmelzpunkt der Temperiersubstanz weniger als 50 °C, bevorzugt weniger als 25 °C und besonders bevorzugt weniger als 10°C unterhalb der Reaktionstemperatur der exothermen Reaktion liegt.

Der Temperaturgradient innerhalb der flüssigen Phase der Temperiersubstanz im Temperierbehältnis zwischen der Phasengrenze fest/flüssig der Temperiersubstanz und dem Reaktionsbehältnis kann relativ klein und weitestgehend konstant bleiben, da mit zunehmender Schichtdicke der flüssigen Phase der Temperiersubstanz die Konvektion der Temperiersubstanz zunimmt. Zusätzlich kann sich mit bei einem Volumenzuwachs der flüssigen Phase der Temperiersubtanz beim Schmelzen der Temperiersubstanz sich die wärmeübertragende Oberfläche der flüssigen Phase der Temperiersubstanz vergrößern, und/oder sich bei einer transparenten, flüssigen Phase mehr Wärme durch Transmission übertragen werden, wodurch der Temperaturgradient weitgehend konstant gehalten werden kann.

Da die Temperatur der Temperiersubstanz an der Phasengrenze der Schmelztemperatur entspricht, bleibt hiermit auch die Temperatur des Reaktionsbehältnisses in einem besonderen Maße konstant.

Beispiele von Temperiersubstanzen, die bei einer Reaktionstemperatur von 180-200 °C der hydrothermalen Karbonisierung verwendbar sind, sind eutektische Mischungen aus mehreren Alkali-Nitraten, z. B. Lithiumnitrat/Natriumnitrat, und/oder eutektische Mischungen aus einem oder mehreren Alkali-Nitraten mit einem oder mehreren Erdalkali-Nitraten, z. B. Kaliumnitrat/Magnesiumnitrat, eutektische Mischungen aus einem oder mehreren Alkali-Acetaten, z.B. Lithiumacetat/Natriumacetat, oder die eutektische Mischung Zinkacetat/ Natriumacetat, Zuckeralkohole wie Dulcitol oder Mannitol, Bernsteinsäure, eine Legierung oder ein reines Salz mit einem entsprechend großen organischen Anion. Bei der Bernsteinsäure kann zusätzlich zur Schmelzwärme Energie durch die endotherme Umwandlung der Bersteinsäure in Bernsteinsäureanhydrid und Wasser aufgenommen und so chemisch gespeichert werden. Es versteht sich von selbst, dass bei anderen Reaktionstemperaturen andere reine Salze oder eutektische Mischungen verwendet werden, die einen Schmelzpunkt innerhalb der oben angegebenen Grenzen in Bezug auf die Reaktionstemperatur innehaben. Der Fachmann kann ohne aufwändige Versuche entsprechende Temperiersubstanzen ermitteln. Entsprechende Temperiersubstanzen sind auch unter dem Namen "Phase Change Materials" bekannt.

Bei der Temperierflüssigkeit kann es sich beispielsweise um Thermoöl oder um unter Druck stehendes, flüssiges Wasser oder um ein Wärmerohr handeln. Das Wärmerohr kann als heat pipe ausgebildet sein, wobei durch kapillare Flüssigkeitsleitung die Temperierflüssigkeit in einen wärmeren Bereich des Flüssigkeitsbehältnisses gelangt, dort verdampft und an einem kälteren Bereich des Flüssigkeitsbehältnisses kondensiert. Die heat pipe kann mit mindestens einem weiteren Flüssigkeitsbehältnis in thermischen Kontakt stehen. Hierbei kann die heat pipe durch mindestens eine weitere Temperierflüssigkeit temperiert werden. Es kann sein, dass die Temperierflüssigkeit in der heat pipe und die weitere Temperierflüssigkeit stofflich voneinander getrennt sind. Insbesondere am oberen Ende der heat pipe kann sich ein weiteres Flüssigkeitsbehältnis zum Kühlen der heat pipe befinden. Es können auch mehr als ein weiteres Flüssigkeitsbehältnis mit Temperierflüssigkeit vorgesehen sein. Dadurch, dass die weitere Temperierflüssigkeit von der heat pipe getrennt ist, kann die weitere Temperierflüssigkeit einfach in einem Kreislauf geführt werden. Die heat pipes, die mit einem sehr geringen Durchmesser ausgebildet sein können, können in einem gut wärmeleitenden Wärmeüberträger, z.B. aus Aluminium, angeordnet sein, um mechanisch stabil angeordnet zu werden. Insbesondere kann an einem Wärmeüberträger an einem unteren Ende der heat pipes eine Heizung zur Erwärmung der Temperierflüssigkeit in den heat pipes angeordnet sein.

Die Temperierflüssigkeit wird in einem offenen oder geschlossenen Kreislauf geführt, in dem Vorrichtungen zum Kühlen und/oder Erwärmen der Temperierflüssigkeit vorgesehen sein können. Ausgangstemperatur und Durchsatz der Temperierflüssigkeit werden vorzugsweise so gewählt, dass während der gesamten exothermen Reaktion die Temperiersubstanz teilweise in der festen Phase und teilweise in der flüssigen Phase vorliegt. Hierdurch wird gewährleistet, dass die Temperatur der Temperiersubstanz dem Schmelzpunkt entspricht und die Temperiersubstanz weiter Wärme ohne Temperaturveränderung aufnehmen oder abgeben kann. Weiterhin wird gewährleistet, dass kristalline Flächen zum Erstarren durch Kristallisation der flüssigen Temperiersubstanz zur Verfügung stehen können, so dass die flüssige Temperiersubstanz nicht unterkühlen kann. Die Temperiervorrichtung kann eine Steuer- und/oder Regelungseinheit, die insbesondere automatisch z.B. durch einen Mikroprozessor ausgeführt ist, aufweisen, die eine Ausgangstemperatur vor Eintritt in das Temperierbehältnis und den Durchsatz der Temperierflüssigkeit entsprechend der Menge an fester und flüssiger Temperiersubstanz einstellt. Um den Anteil von Temperiersubstanz in der flüssigen Phase zu bestimmen, kann die elektrische Leitfähigkeit der Temperiersubstanz bestimmt werden. Dieser Wert wird dann an die Steuer-und/oder Regelungseinheit weitergeleitet werden, die die Ausgangstemperatur und den Durchsatz der Temperierflüssigkeit entsprechend anpasst. Liegt beispielsweise nur wenig Temperiersubstanz in der festen Phase vor und soll Reaktionswärme abgeführt werden, so wird die Steuer- und/oder Regelungseinheit die Ausgangstemperatur der Temperierflüssigkeit weiter unter den Schmelzpunkt der Temperiersubstanz verringern und/oder den Durchsatz erhöhen. Liegt andererseits beispielsweise nur wenig Temperiersubstanz in der flüssigen Phase vor und soll Wärme der Prozessmasse zugeführt werden, so wird die Steuer- und/oder Regelungseinheit die Ausgangstemperatur der Temperierflüssigkeit über den Schmelzpunkt der Temperiersubstanz und/oder den Durchsatz erhöhen. Eine große Menge an eingesetzter Temperiersubstanz kann die Freiheitsgrade der Steuerung und/oder Regelung, wie Durchsatz und/oder Ausgangstemperatur der Temperierflüssigkeit, erhöhen. So kann es sein, dass die Temperierflüssigkeit zeitweise nicht durch das Flüssigkeitsbehältnis strömt, wenn die Temperiersubstanz ausreichend sowohl in der festen als auch in der flüssigen Phase vorliegt. Ein Einsatz bei einer über einen längeren Zeitraum ablaufenden Reaktion wie der hydrothermalen Karbonisierung ist daher besonders sinnvoll, da eventuell über längere Zeitstrecken die Temperierflüssigkeit nicht bewegt werden muss und elektrische Leistung einer die Temperierflüssigkeit bewegenden Pumpe eingespart werden kann.

Um den Wirkungsgrad zu erhöhen, kann vorgesehen sein, die von der Temperierflüssigkeit abzugebende Wärme, z.B. zum Heizen einer Warmwasseranlage, Betrieb einer Heizung, einer Turbine, einer weiteren Karbonisierungsanlage und/oder einer Aufbereitung von Reaktionsprodukten, zu nutzen. Insbesondere kann die Wärme der Temperierflüssigkeit zum Heizen einer Warmwasseranlage verwendet werden.

Da die Temperiersubstanz selber nur eine zu geringe Wärmeleitfähigkeit aufweisen kann, kann es notwendig sein, eine große Wärmeaustauschfläche zwischen dem Reaktionsbehältnis und der Temperiersubstanz und/oder zwischen der Temperiersubstanz und dem Flüssigkeitsbehältnis zur Verfügung zu stellen. Hierzu können Kühlrippen zum Kühlen oder Erwärmen der Temperiersubstanz aus einem Material mit großer Wärmeleitfähigkeit, beispielsweise Graphit, Aluminium oder Kupfer, vorgesehen sein, die die Wärme innerhalb der Temperiersubstanz verteilen. Hierbei kann die anisotrope Wärmeleitfähigkeit von Graphit ausgenutzt werden. Erste Kühlrippen können von einer inneren Oberfläche eines Teils des Temperierbehältnisses, der an das Reaktionsbehältnis angrenzt, in einen Innenraum des Temperierbehältnisses reichen. Alternativ oder zusätzlich können zweite Kühlrippen von einer inneren Oberfläche eines Teils des Temperierbehältnisses, der an das Flüssigkeitsbehältnis angrenzt, in den Innenraum des Temperierbehältnisses reichen. Vorzugsweise werden die ersten und zweiten Kühlrippen derart ausgebildet, dass eine weitestgehend gleichförmige Schicht der festen und/oder der flüssigen Temperiersubstanz erhalten wird, die eine geringere Dicke und eine größere Oberfläche als entsprechende Schichten ohne erste und/oder zweite Kühlrippen aufweist. Vorteilhafterweise werden die ersten Kühlrippen nur von flüssiger Temperiersubstanz oder nur von flüssiger Temperiersubstanz und einem Inertgas umgeben. Alternativ oder zusätzlich kann die gemeinsame Wand des Temperierbehältnisses und des Reaktionsbehältnisses und/oder die gemeinsame Wand des Temperierbehältnisses und des Flüssigkeitsbehältnisses groß genug gewählt ist, dass auf Kühlrippen verzichtet werden kann. Dies ist bei der hydrothermale Karbonisierung insbesondere für die gemeinsame Wand des Temperierbehältnisses und des Reaktionsbehältnisses denkbar, da zur Vermeidung von Temperaturdifferenzen innerhalb des Reaktionsbehältnisses auf Grund der Inhomogenität und Viskosität der eingesetzten Biomasse das Oberflächen/Volumenverhältnis des Reaktionsbehältnisses groß gewählt werden muss. Andererseits oder zusätzlich kann es sein, dass dritte Kühlrippen zum Kühlen oder Erwärmen der Prozessmasse von einer inneren Oberfläche des Reaktionsbehältnisses in einen Innenraum des Reaktionsbehältnisses reichen, um den Wärmeübergang zwischen dem Reaktionsbehältnis und der Prozessmasse zu erhöhen.

Das Reaktionsbehältnis kann als Rohrreaktor oder als Rührkesselkaskade ausgebildet sein. Bei einem kontinuierlich arbeitenden Rohrreaktor als Reaktionsbehältnis oder einem Reaktionsbehältnis, das mehrere getrennte Stufen aufweist, wie z. B. der Rührkesselkaskade, können die ersten, zweiten und/oder dritten Kühlrippen so angeordnet sein, dass sie die Reaktionswärme einzelner Teilreaktionen der exothermen Reaktion, die innerhalb des Reaktionsbehältnisses stattfinden, wiedergeben. Ist beispielsweise die Reaktion zu Beginn stark exotherm, so kann am Anfang des Rohrreaktors eine höhere Anzahl an ersten, zweiten und/oder dritten Kühlrippen als im weiteren Verlauf des Rohrreaktors angeordnet sein. Auch können unterschiedliche Temperiersubstanzen mit unterschiedlichen Schmelzpunkten den einzelnen Teilreaktionen der exothermen Reaktion angepasst sein. So können verschiedene Abschnitte des Rohrreaktors von unterschiedlichen Temperiersubstanzen umgeben sein. Auch verschiedene Kessel einer Kaskade können von unterschiedlicher Anzahl von ersten, zweiten und/oder dritten Kühlrippen und/oder unterschiedlichen Temperiersubstanzen umgeben sein. Das Temperierbehältnis kann somit in einzelne Abschnitte segmentiert sein. Eine Segmentierung kann auch bei nur einer Temperiersubstanz eingesetzt werden, um eine gute Verteilung der flüssigen Phase der Temperiersubstanz innerhalb des Temperierbehältnisses zu erreichen. Hierdurch kann das Reaktionsbehältnis möglichst gleichmäßig von der flüssigen Phase der Temperiersubstanz umgeben sein.

Es kann sein, dass ein Katalysator, insbesondere eine Säure wie Zitronensäure oder ein Salz, erst im Reaktionsbehältnis hinzugefügt wird, um den Beginn und/oder den Verlauf der Reaktion besser steuern oder regeln zu können. Insbesondere kann es ebenfalls sein, dass der Katalysator nur zu Beginn der Reaktion hinzugegeben wird, da durch bei der Reaktion gebildete Säuren die Reaktion autokatalytisch verlaufen kann. Der Katalysator kann vorzugsweise an oder in der Nähe der zum Temperierbehältnis angrenzenden, inneren Oberfläche des Reaktionsbehältnisses zugegeben werden. Hierdurch entsteht Reaktionswärme zunächst nur nahe dem Temperierbehältnis und kann so leicht aus dem Reaktionsbehältnis auch bei unzureichender Durchmischung der Prozessmasse abgeführt werden. Aus gleichen Beweggründen kann vorgesehen sein, dass zusätzlich oder alternativ ein Oberflächenkatalysator verwendet wird, wobei insbesondere der Oberflächenkatalysator sich an der zum Temperierbehältnis angrenzenden, inneren Oberfläche des Reaktionsbehältnisses angeordnet wird. Das heißt, dass die innere Oberfläche des Reaktionsbehältnisses zumindest teilweise einen Oberflächenkatalysator aufweisen kann. Beispiele für mögliche Oberflächenkatalysatoren sind TiO₂ , insbesondere als Anatas, oder die γ-Form von Al₂O₃. Wird Titan als Material für das Reaktionsbehältnis oder die innere Oberfläche des Reaktionsbehältnisses verwendet, so kann ein Oberflächenkatalysator aus TiO₂ auch während der Reaktion erst gebildet werden. Ein weiterer Vorteil eines Oberflächenkatalysators liegt darin, dass bei einem Ausfall einer ersten Durchmischungsvorrichtung zur besseren Durchmischung der Prozessmasse, die weiter unten beschrieben ist, die exotherme Reaktion verlangsamt wird oder sogar zum Erliegen kommt, da keine noch zu reagierenden Edukte mehr zu dem Oberflächenkatalysator gelangt. Hierdurch kann die Sicherheit der exothermen Reaktion weiter gesteigert werden, da so ein Überhitzen der Prozessmasse verhindert wird. Zudem kann ein pH-Wert der Prozessmasse im nicht für das Reaktionsbehältnis korrodierenden Bereich gewählt werden. Der Oberflächenkatalysator kann dem Material des Reaktionsbehältnisses gleichen, so dass keine Beschichtung des Reaktionsbehältnisses notwendig ist. Alternativ kann die innere Oberfläche des Reaktionsbehältnisses mit dem Oberflächenkatalysator beschichtet sein. Innere Oberflächen, an denen die exotherme Reaktion nicht ablaufen soll, können mit anderen hitze- und korrosionsbeständigen Materialien z.B. durch ein Flammspritzverfahren beschichtet sein.

Durch Ätzen und/oder Aufrauen kann die Oberfläche zwischen dem Reaktionsbehältnis und des Temperierbehältnis auf Seite des Reaktionsbehältnisses und/oder des Temperierbehältnisses vergrößert werden. Bei einem kontinuierlichen Rohrreaktor als Reaktionsbehältnis kann der Oberflächenkatalysator nur in einem Bereich angeordnet sein, in dem die zu katalysierende Reaktion stattfinden soll. Es können auch unterschiedliche Oberflächenkatalysatoren in unterschiedlichen Bereichen des Rohrreaktors vorhanden sein. Analog kann bei einer Kaskade nur ein Teil der Kessel einen Oberflächenkatalysator aufweisen. Auch sind unterschiedliche Oberflächenkatalysatoren in unterschiedlichen Kesseln der Kaskade denkbar.

Zu den ersten Durchmischungsvorrichtungen zählen eine Vorrichtung, die das Reaktionsbehältnis mechanisch schüttelt, oder eine erste Durchmischungsfläche oder mindestens eine erste Schwingungsvorrichtung. Die erste Durchmischungsfläche bewegt sich translatorisch und/oder rotatorisch in oder an dem Reaktionsbehältnis, wird rein mechanisch angetrieben und kann z.B. als ein Rührer ausgebildet sein. Die erste Schwingungsvorrichtung kann die Prozessmasse in Schwingung versetzen und/oder zumindest Teile des Reaktionsbehältnisses, insbesondere die dritten Kühlrippen, in Schwingungen versetzen oder zu Schwingungen anregen. Unter Schwingungen sind hierbei auch Wellen zu verstehen. Die Schwingungen können im Schall- oder Ultraschallbereich oder in einem niederfrequenten Bereich, wie sie durch rein mechanische Vorrichtungen erzeugt werden können, liegen. Je nach Bewegungsart kann die erste Durchmischungsfläche somit auch zu den ersten Schwingungsvorrichtungen zählen. Die erste Schwingungsvorrichtung kann mindestens ein Piezoelement aufweisen. Vorzugsweise sind mehrere Piezoelemente vorgesehen. Die Piezoelemente können so eingestellt werden, dass sich die von ihnen verursachten Schwingungen gegenseitig verstärken oder abschwächen. Vorzugsweise kann die sich gegenseitig verstärkende oder abschwächende Wirkung der Piezoelemente zeitlich im Verlauf der exothermen Reaktion verändert werden. Die erste Schwingungsvorrichtung kann so eingerichtet sein, dass hauptsächlich die Prozessmasse in Schwingungen versetzt wird oder dass Wände des Temperierbehältnisses und/oder die dritten Kühlrippen ebenfalls in Schwingungen versetzt oder zu Schwingungen angeregt werden. Durch die erste Durchmischungsvorrichtung werden starke Strömungen, insbesondere Turbulenzen, in der Prozessmasse in der Nähe der Oberflächen, die durch die erste Durchmischungsvorrichtung bewegt werden, hervorgerufen. Insbesondere sind solche ersten Durchmischungsvorrichtungen, zu denen die Vorrichtung zum mechanischen Schütteln des Reaktionsbehältnisses als auch die ersten Schwingungsvorrichtungen zählen, vorteilhaft, die die Prozessmasse in der Nähe der dritten Kühlrippen und/oder der inneren Oberfläche des Reaktionsbehältnisses bewegen lässt. Dies erleichtert den Wärmeübergang zwischen der Prozessmasse und dem Reaktionsbehältnis. Zudem kann durch die Durchmischungsvorrichtung gegebenenfalls, z. B. bei einer endothermen Teilreaktion, der Prozessmasse Energie zugeführt und diese erhitzt werden.

Ein weiterer Vorteil eines Einsatzes einer ersten Schwingungsvorrichtung, insbesondere eines Ultraschallgerätes, ist, dass die Biomasse bei der hydrothermalen Karbonisierung durch Schwingungen im Ultraschallbereich disorganisiert werden kann, wobei eine grobe Struktur der Biomasse zerstört wird, einzelne Bestandteile der Biomasse sich voneinander separieren und/oder gegebenenfalls schwache Bindungen, wie Wasserstoffbrückenbindungen, aufgespalten werden. Ein weiterer Vorteil des Einsatzes einer ersten Schwingungsvorrichtung kann sein, dass der Oberflächenkatalysator durch die Ultraschallschwingungen angeregt wird. Zudem verhindern die Ultraschallschwingungen des Oberflächenkatalysators, dass sich Feststoffe, z.B. Kohle als Reaktionsprodukt, an dem Oberflächenkatalysator ablagern. Eine Disorganisation der Biomasse ist auch durch Mikrowellen möglich. Ein Einsatz einer ersten Durchmischungsvorrichtung ist demnach für die Temperiervorrichtung vorteilhaft, da eine bessere Durchmischung der Prozessmasse die Temperierung und insbesondere den Wärmeübergang zum Reaktionsbehältnis erleichtert. Ein Einsatz einer ersten Durchmischungsvorrichtung ist aber auch unabhängig von der erfindungsgemäßen Temperiervorrichtung aus den oben genannten Gründen günstig, z.B. um den Transport zu einem Oberflächenkatalysator zu verbessern oder im Falle einer ersten Schwingungsvorrichtung, um einen Oberflächenkatalysator anzuregen und/oder zu reinigen. Eine erste Durchmischungsvorrichtung ist daher auch in einem Reaktionsbehältnis denkbar, das nicht an ein erfindungsgemäßes Temperierbehältnis oder Flüssigkeitsbehältnis angrenzt. Es kann daher vorgesehen sein, dass eine erste Schwingungsvorrichtung zum Beschleunigen der exothermen Reaktion, insbesondere mindestens einer Teilreaktion der hydrothermalen Karbonisierung, vorgesehen ist, wobei die erste Schwingungsvorrichtung an einem Reaktionsbehältnis, in dem die exotherme Reaktion einer Prozessmasse stattfindet, angeordnet ist, wobei durch die erste Schwingungsvorrichtung Strömungen in der Prozessmasse hervorgerufen werden.

Es kann sein, dass mehrere erste Durchmischungsvorrichtungen bei einer exothermen Reaktion eingesetzt werden. Alternativ können durch die durch die erste Schwingungsvorrichtung entstehende Strömungen und Turbulenzen zur Durchmischung in der Prozessmasse ausreichend sein, so dass auf weitere erste Durchmischungsvorrichtungen verzichtet werden kann. Ein Einsatz eines Oberflächenkatalysators zusammen mit einer ersten Schwingungsvorrichtung ist besonders vorteilhaft, wenn die durch die erste Schwingungsvorrichtung verursachten Strömungen und Turbulenzen an der inneren Oberfläche des Reaktionsbehältnisses entstehen und so die Prozessmasse dem Oberflächenkatalysator zugeführt werden kann.

Es kann sein, dass eine Durchmischung der flüssigen Temperiersubstanz durch freie Konvektion ausreichend ist. Mechanische Vorrichtungen zur besseren Durchmischung der flüssigen Temperiersubstanz und deren elektrische Leistungsaufnahme können somit eingespart werden. Alternativ kann mindestens eine zweite Durchmischungsvorrichtung vorgesehen sein, die die Durchmischung und somit die Konvektion der flüssigen Temperiersubstanz erhöht. Vorteilhafterweise ist bei einer hohen abzuführenden Reaktionswärme ein großer Teil der Temperiersubstanz flüssig, wodurch die Temperiersubstanz besser durchmischbar ist, während in Zeiten oder Zonen geringer Reaktionswärme die Temperiersubstanz überwiegend in der festen Phase vorliegt, wobei in diesem Fall die Temperiersubstanz auch nicht gut durchmischbar sein muss.

Zu den zweiten Durchmischungsvorrichtungen zählen eine Vorrichtung, die das Reaktionsbehältnis mechanisch relativ zum Temperierbehältnis bewegt, oder eine zweite Durchmischungsfläche oder mindestens eine zweite Schwingungsvorrichtung. Die zweite Durchmischungsfläche bewegt sich translatorisch und/oder rotatorisch in oder an dem Temperierbehältnis, wird rein mechanisch angetrieben und kann z.B. als ein Rührer ausgebildet sein. Die zweite Schwingungsvorrichtung kann die flüssige Temperiersubstanz in Schwingung versetzen und/oder zumindest Teile des Temperierbehältnisses, insbesondere die ersten Kühlrippen, in Schwingungen versetzen oder zu Schwingungen anregen. Unter Schwingungen sind hierbei auch Wellen zu verstehen. Die Schwingungen können im Schall- oder Ultraschallbereich oder in einem niederfrequenten Bereich, wie sie durch rein mechanische Vorrichtungen erzeugt werden können, liegen. Je nach Bewegungsart kann die zweite Durchmischungsfläche somit auch zu den zweiten Schwingungsvorrichtungen zählen. Die zweite Schwingungsvorrichtung kann mindestens ein Piezoelement aufweisen. Vorzugsweise sind mehrere Piezoelemente vorgesehen. Die Piezoelemente können so eingestellt werden, dass sich die von ihnen verursachten Schwingungen gegenseitig verstärken oder abschwächen. Vorzugsweise kann die sich gegenseitig verstärkende oder abschwächende Wirkung der Piezoelemente zeitlich im Verlauf der exothermen Reaktion verändert werden. Die zweite Schwingungsvorrichtung kann so eingerichtet sein, dass hauptsächlich die flüssige Temperiersubstanz in Schwingungen versetzt wird oder dass Wände des Temperierbehältnisses und/oder die ersten Kühlrippen ebenfalls in Schwingungen versetzt oder zu Schwingungen angeregt werden. Durch die zweite Durchmischungsvorrichtung werden starke Strömungen, insbesondere Turbulenzen, in der Temperiersubstanz in der Nähe der Oberflächen, die durch die zweite Durchmischungsvorrichtung bewegt werden, hervorgerufen. Insbesondere sind solche zweite Durchmischungsvorrichtungen vorteilhaft, die die flüssige Temperiersubstanz in der Nähe der ersten Kühlrippen und/oder des Reaktionsbehältnisses bewegen lässt. Dies erleichtert den Wärmeübergang zwischen der flüssigen Temperiersubstanz und dem Reaktionsbehältnis. Auch kann bei einer eutektischen Mischung durch eine Durchmischung der flüssigen Temperiersubstanz an der Phasengrenze fest/flüssig der Temperiersubstanz die Auskristallisierung gefördert werden. Hierzu zählen die Vorrichtung zur relativen Bewegung des Reaktionsbehältnisses zu dem Temperierbehältnis als auch zweite Schwingungsvorrichtungen, die den an das Reaktionsbehältnis angrenzenden Teil des Temperierbehältnisses und/oder die ersten Kühlrippen in Schwingung versetzen. Die zweiten Durchmischungsvorrichtungen sind auch unabhängig von der erfindungsgemäßen Temperiersubstanz bei anderen Temperiersubstanzen einsetzbar.

Es ist denkbar, dass in einer Temperiervorrichtung sowohl eine oder mehrere erste Durchmischungsvorrichtungen als auch eine oder mehrere zweite Durchmischungsvorrichtungen angeordnet sind. Weiterhin kann es sein, dass die Temperiervorrichtung nur eine oder mehrere erste Durchmischungsvorrichtungen oder eine oder mehrere zweite Durchmischungsvorrichtungen aufweist. Es ist auch möglich, dass eine Durchmischungsvorrichtung sowohl als erste als auch als zweite Durchmischungsvorrichtung dient, z.B. können Piezoelemente eine gemeinsame Wand des Temperierbehältnisses und des Reaktionsbehältnisses in Schwingung versetzen, so dass sowohl in der flüssigen Temperiersubstanz im Temperierbehältnis als auch in der Prozessmasse im Reaktionsbehältnis starke Strömungen verursacht werden.

Wird die exotherme Reaktion unter Druck durchgeführt, so kann ein Druckbehälter das Reaktionsbehältnis, das Temperierbehältnis und das Flüssigkeitsbehältnis außen umgeben. Hierdurch kann vorteilhafterweise auch unter Druck stehendes Wasser als Temperierflüssigkeit verwendet werden. Weiterhin kann der außen angeordnete dickwandige Druckbehälter nicht den Wärmeübergang zwischen der Prozessmasse und der Temperiersubstanz verringern. Der Druckbehälter kann innen eine gasdurchlässige Isolationsschicht, z.B. Mineralwolle aufweisen, welche insbesondere mit einem unter Druck stehendem Inertgas, z.B. gasförmigem Kohlendioxid, geflutet sein kann, um das Reaktionsbehältnis, das Temperierbehältnis und/oder das Flüssigkeitsbehältnis nach außen zu isolieren. Für den Fall einer Überhitzung der Prozessmasse kann eine Überdruckausgleichsleitung zwischen dem Reaktionsbehältnis und der Umgebung mit einem Überdruckventil für das Ablassen von Dampf vorgesehen sein. Um eine Druckbelastung des Reaktionsbehältnisses zu vermeiden, kann alternativ oder zusätzlich ein Druckausgleich des Reaktionsbehältnisses mit dem Druckbehälter vorgesehen sein. Dazu können insbesondere über eine längere Leitungsführung in kältere Bereiche des Druckbehälters kondensierende Bestandteile eines Gases aus der Prozessmasse, z.B. Wasserdampf, abgetrennt werden. Bei einem Druckausgleich des Reaktionsbehältnisses mit dem Druckbehälter kann in einer bevorzugten Ausführungsform ein Stoffaustausch zwischen dem Reaktionsbehältnis und dem Druckbehälter möglich sein.

Um die im Vergleich zum Phasenübergang flüssig/gasförmig zwar geringere, aber dennoch vorhandene Volumenänderung der Temperiersubstanz beim Phasenübergang fest/flüssig auszunutzen, kann in dem Temperierbehältnis ein Gas vorgesehen sein. Hierzu kann sich beispielsweise das Reaktionsbehältnis im Druckausgleich und/oder Stoffausgleich mit der Isolationsschicht des Druckbehälters befinden. Insbesondere kann das Reaktionsbehältnis ein Inertgas, z. B. Kohlendioxid, aufweisen, das vom und in die Isolationsschicht des Druckbehälters strömen kann. Alternativ kann sich das Gas in einem abgeschlossenen Temperierbehältnis befinden und bei Volumenänderungen der Temperiersubstanz entsprechend komprimiert bzw. expandiert werden. In beiden Fällen kann sich in dem Temperierbehältnis ein gasförmiges Inertgas, feste und flüssige Temperiersubstanz befinden. Schmilzt nun die Temperiersubstanz weiter, so erhöht sich das Volumen der flüssigen Temperiersubstanz und verringert sich das Volumen, das das gasförmige Inertgas in dem Reaktionsbehältnis einnimmt. Durch die Volumenänderung ergibt sich eine Bewegung der flüssigen Temperiersubstanz, die zum Wärmetransport beiträgt. Zugleich bedeckt die flüssige Temperiersubstanz eine größere, an das Reaktionsbehältnis angrenzende Wand des Temperierbehältnisses und/oder eine größere Teil der Oberfläche der ersten und/oder zweiten Kühlrippen. Damit die flüssige Temperiersubstanz beim Ausdehnen das gasförmige Inertgas verdrängen kann, können die ersten und/oder zweiten Kühlrippen insbesondere im Wesentlichen parallel zur Schwerkraft, bzw. vertikal zu einem Untergrund angeordnet sein.

Die exotherme Reaktion kann eine erste, stark exotherme Teilreaktion der hydrothermalen Karbonisierung sein. Hierbei hat die Temperiersubstanz die Funktion, die Reaktionswärme abzuführen und die Prozessmasse zu kühlen. Insbesondere können hierbei Temperaturen zwischen 180°C und 250°C vorgesehen sein. Gegebenenfalls kann die Prozessmasse vor Beginn der Reaktion durch die Temperiersubstanz erwärmt werden. Alternativ oder zusätzlich kann die exotherme Reaktion eine zweite, nur schwach exotherme Teilreaktion der hydrothermalen Karbonisierung sein. Hierbei kann die zweite Teilreaktion eine Ausfällreaktion der entstandenen Kohle beinhalten. Die Temperiersubstanz dient zum Konstanthalten der Temperatur der zweiten Teilreaktion, wobei der Prozessmasse Wärme durch die Temperiersubstanz zu- oder abgeführt werden kann, je nachdem ob die Reaktionswärme den Wärmeverlust über Außenwände über- oder unterschreitet. Vorzugsweise wird sowohl die erste als auch die zweite Teilreaktion durch eine Temperiersubstanz temperiert. Hierbei kann es sich um die gleiche oder um unterschiedliche Temperiersubstanzen handeln. Es ist denkbar, die hydrothermale Karbonisierung in weitere Teilreaktionen zu unterteilen, die ebenfalls in einem Reaktionsbehältnis mit einer erfindungsgemäßen Temperiervorrichtung stattfinden können. Hierzu können jeweils die Wärmeaustauschflächen und die Temperiersubstanzen den Erfordernissen der jeweiligen Teilreaktion angepasst werden. Es kann sein, dass vor der ersten exothermen Teilreaktion eine endotherme Teil-reaktion abläuft. Hierzu kann vorgesehen sein, die Prozessmasse vor dem Eintritt oder nach dem Eintritt in das Reaktionsbehältnis durch eine zusätzliche Heizvorrichtung zu erwärmen. Um allgemein unerwünschte Nebenprodukte zu vermeiden, kann vorgesehen sein, dass die Temperatur während der gesamten hydrothermalen Karbonisierung unter 230°C liegt und insbesondere zwischen 180°C und 230°C beträgt.

Es ist denkbar, dass die Reaktionswärme der ersten Teilreaktion dazu verwendet wird, die zweite Teilreaktion zu temperieren. Als Wärme übertragendes Medium kann die Temperiersubstanz und/oder die Temperierflüssigkeit dienen. So kann es zum Beispiel vorgesehen sein, dass in der ersten, stark exothermen Teilreaktion der hydrothermalen Karbonisierung die Temperierflüssigkeit Reaktionswärme aufnimmt und die Reaktionswärme an die zweite, nur schwach exotherme Teilreaktion der hydrothermalen Karbonisierung abgibt. Die Temperierflüssigkeit kann dabei die Reaktionswärme direkt von einem ersten Reaktionsbehältnis der ersten Teilreaktion oder über eine erste Temperiersubstanz der ersten Teilreaktion aufnehmen. Es kann vorgesehen sein, dass die Temperierflüssigkeit die Wärme direkt an ein zweites Reaktionsbehältnis der zweiten Teilreaktion oder über eine zweite Temperiersubstanz der zweiten Teilreaktion abgibt. Auch kann nur ein Flüssigkeitsbehältnis zwischen dem Temperierbehältnis der ersten Teilreaktion und dem Temperierbehältnis der zweiten Teilreaktion angeordnet sein. Als weitere Alternative kann die Temperiersubstanz selber für einen Wärmetransport ohne zur Hilfenahme der Temperierflüssigkeit sorgen. Hierbei zirkuliert eine Temperiersubstanz für beide Teilreaktionen in der flüssigen Phase zwischen dem ersten und zweiten Reaktionsbehältnis. Auch kann die Temperiersubstanz der ersten Teilreaktion an die Temperiersubstanz der zweiten Teilreaktion grenzen. Um jede der zuvor aufgeführten Temperiermöglichkeiten räumlich zu vereinfachen, kann es vorgesehen sein, dass das Reaktionsbehältnis der zweiten Teilreaktion zumindest teilweise von dem Reaktionsbehältnis der ersten Teilreaktion umgeben ist. Alternativ kann selbstverständlich auch das Reaktionsbehältnis der ersten Teilreaktion zumindest teilweise von dem Reaktionsbehältnis der zweiten Teilreaktion umgeben sein. Denkbar ist insbesondere folgende Reihenfolge von außen nach innen oder von innen nach außen für eine Anordnung der einzelnen Behältnisse zueinander: Reaktionsbehältnis der ersten Teilreaktion, Temperierbehältnis der ersten Teilreaktion, Flüssigkeitsbehältnis, Temperierbehältnis der zweiten Teilreaktion, Reaktionsbehältnis der zweiten Teilreaktion.

Es ist denkbar, dass die erfindungsgemäße Temperiervorrichtung nach einem der Ansprüche 5 bis 12 mit einem Verfahren nach einem der Ansprüche 1 bis 4 betreibbar ist.

Weiterhin wird eine Karbonisierungsanlage mit mindestens einer erfindungsgemäßen Temperiervorrichtung unter Schutz gestellt. Hierbei weist die Karbonisierungsanlage vorzugsweise eine erste Temperierungsvorrichtung für die erste Teilreaktion und/oder eine zweite Temperierungsvorrichtung für die zweite Teilreaktion, eine Vorbehandlungsbehältnis und mindestens ein Auffangbehältnis zur Aufnahme mindestens eines Produktes der hydrothermalen Karbonisierung auf. Die erste und die zweite Temperierungsvorrichtung können eine gemeinsame Steuer -und/oder Regelungseinheit aufweisen und/oder können von einen gemeinsamen Druckbehälter bis auf die Steuer -und/oder Regelungseinheit umgeben sein. Die erste und die zweite Temperierungsvorrichtung können jeweils separate Temperierflüssigkeitskreisläufe oder einen gemeinsamen Temperierflüssigkeitskreislauf aufweisen. Die Karbonisierungsanlage kann einen Wärmeaustauscher aufweisen, in dem zumindest ein Teil der Prozessmasse nach Austritt aus dem zweiten Reaktionsbehältnis die Prozessmasse vor Eintritt in das erste Reaktionsbehältnis erwärmt. Zusätzlich kann eine weitere Heizvorrichtung vorgesehen sein, die die Prozessmasse vor dem Eintritt in das Reaktionsbehältnis erwärmt. Die Prozessmasse kann durch eine Pumpvorrichtung, eine Spindel oder ähnliches getrieben in das ersten und/oder zweiten Reaktionsbehältnis gelangen.

Die einzelnen Teilschritte der hydrothermalen Karbonisierung können jeweils kontinuierlich oder diskontinuierlich durchgeführt werden. Vorzugsweise wird die hydrothermale Karbonisierung kontinuierlich und/oder mehrstufig durchgeführt. Das Reaktionsbehältnis kann zumindest teilweise in strömungstechnisch parallele Teilbehältnisse aufgeteilt sein und insbesondere einen Rohrbündelreaktor ähneln. Es können mehrere Karbonisierungsanlage strömungstechnisch parallel betrieben werden, wobei eine gemeinsame Steuer- und/oder Regelungseinheit, eine gemeinsame Pumpvorrichtung zum Befördern der Prozessmasse, ein gemeinsames Auffangbehältnis und/oder ein gemeinsames Vorbehandlungsbehältnis vorhanden sein können.

Weitere die Erfindung verbessernde Maßnahmen ergeben sich aus der nachfolgenden Beschreibung zu Ausführungsbeispielen der Erfindung, welche in den Figuren schematisch dargestellt ist. Sämtliche aus den Ansprüchen, der Beschreibung oder der Zeichnung hervorgehende Merkmale und/oder Vorteile, einschließlich konstruktiver Einzelheiten, räumlicher Anordnung und Verfahrensschritte, können sowohl für sich als auch in den verschiedensten Kombinationen erfindungswesentlich sein. Es zeigen:
- Fig. 1: ein erstes Ausführungsbeispiel für eine erfindungsgemäße Temperiervorrichtung,
- Fig. 1a: das erste, jedoch leicht abgeänderte Ausführungsbeispiel der Temperiervorrichtung,
- Fig. 1b: Schnitt entlang der Linie B-B aus Fig. 1a,
- Fig. 2: ein zweites Ausführungsbeispiel für eine erfindungsgemäße Temperiervorrichtung,
- Fig. 2a: das zweite, jedoch leicht abgeänderte Ausführungsbeispiel der Temperiervorrichtung,
- Fig. 3: ein erstes Ausführungsbeispiel einer erfindungsgemäßen Karbonisierungsanlage und
- Fig. 4: ein zweites Ausführungsbeispiel einer erfindungsgemäßen Karbonisierungsanlage.

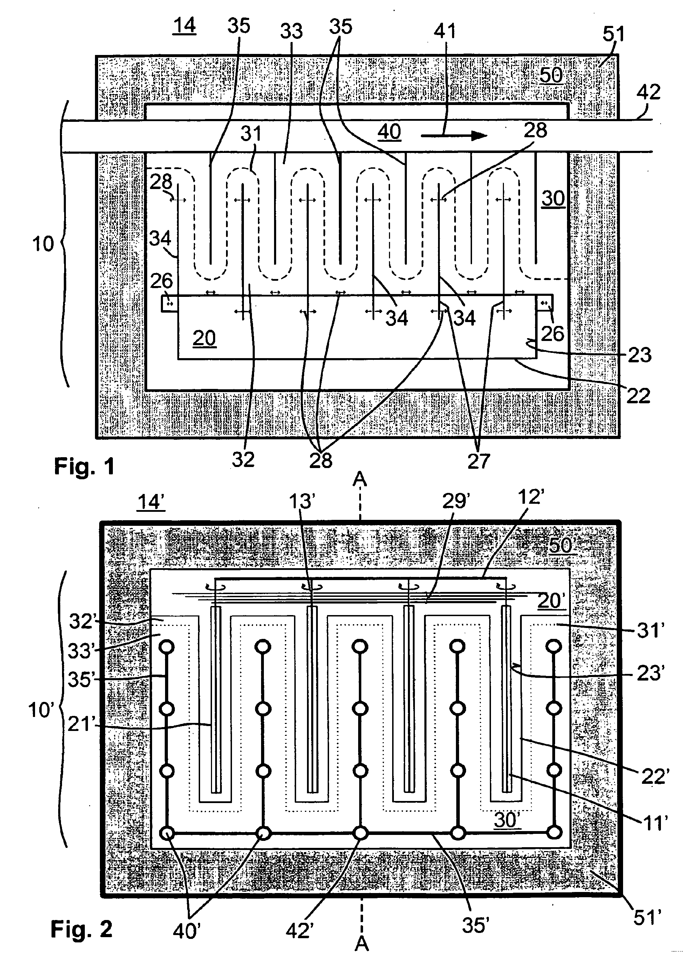

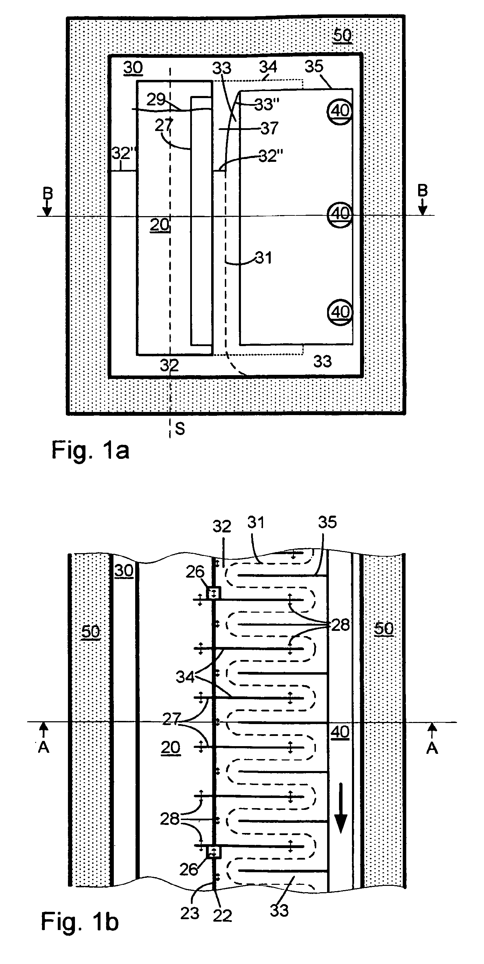

In Fig. 1 ist ein Querschnitt durch ein Reaktionsbehältnis 20, das als ein Rohrreaktor ausgeführt ist und in dem sich eine Prozessmasse befindet, dargestellt. In der Prozessmasse findet eine stark exotherme, erste Teilreaktion einer hydrothermalen Karbonsierung statt. Hierbei bewegt sich die Prozessmasse senkrecht zur Zeichenebene durch den Rohrreaktor. Der Querschnitt des Reaktionsbehältnisses 20 wird so gewählt, dass der Wärmetransport aus dem Inneren der Prozessmasse zu dem Reaktionsbehältnis 20 ausreicht, ein Verdampfen des Wassers innerhalb der Prozessmasse im Wesentlichen zu verhindern. Ein erstes Ausführungsbeispiel eines erfindungsgemäßen Temperierbehältnisses 30 umgibt das Reaktionsbehältnis 20. In dem Temperierbehältnis 30 ist eine Temperiersubstanz angeordnet, die einen Schmelzpunkt knapp unterhalb der Reaktionstemperatur der ersten Teilreaktion innehat. Durch Aufnahme von Reaktionswärme der ersten Teilreaktion schmilzt die Temperiersubstanz bei einem konstanten Schmelzpunkt und temperiert so die erste Teilreaktion. Inhomogenitäten der Prozessmasse und daraus resultierende Spitzen in der Reaktionswärme können so gut gepuffert werden, ohne dass es zu lokalen Überhitzungen kommt oder eine schnellreagierende Steuerung der Temperierung notwendig ist.

Um ein vollständiges Schmelzen der Temperiersubstanz und damit ein Ansteigen der Temperatur im Temperierbehältnis und eine eventuelle spätere Unterkühlung der Temperiersubstanz zu vermeiden, steht die Temperiersubstanz in thermischen Kontakt mit einem Flüssigkeitsbehältnis 40, das von einer Temperierflüssigkeit durchströmt wird. Die Temperierflüssigkeit weist eine geringere Temperatur als die Schmelztemperatur der Temperiersubstanz auf, so dass Wärme von der Temperiersubstanz an die Temperierflüssigkeit übergehen kann. Hierdurch erstarrt die Temperiersubstanz in der Nähe der Temperierflüssigkeit, so dass eine Phasengrenze 31 in der Temperiersubstanz vorhanden ist. In der Nähe des Reaktionswärme abgebenden Reaktionsbehältnisses 20 liegt die Temperiersubstanz in der flüssigen Phase 32 vor, während in der Nähe des Flüssigkeitsbehältnisses 40 die Temperiersubstanz in der festen Phase 33 unterhalb des Schmelzpunktes vorliegt. In dem ersten Ausführungsbeispiel fließt die Temperierflüssigkeit gemäß dem Pfeil 41, so dass sich die Temperierflüssigkeit im Kreuzstrom zu der Richtung, in der sich die Prozessmasse durch das Reaktionsbehältnis 20 bewegt, strömt. Das Flüssigkeitsbehältnis 40 kann aus einem mäanderförmigen Rohr aufgebaut sein. Alternativ ist das Flüssigkeitsbehältnis 40 aus einzelnen, strömungstechnisch parallelen geführten Rohren aufgebaut, von denen in Fig. 1 nur ein Rohr 42 im Längsschnitt dargestellt ist. In diesem Fall ist es möglich, den Durchfluss durch die einzelnen Rohre 42 und damit die Temperierung durch die Temperierflüssigkeit zu unterschiedlichen Abschnitten des Reaktionsbehältnisses 20 unterschiedlich einzustellen.

Das Temperierbehältnis 30 und das Reaktionsbehältnis 20 haben eine gemeinsame das Reaktionsbehältnis 20 umschließende Wand 22. Das Temperierbehältnis 30 und das Flüssigkeitsbehältnis 40 werden durch die Rohre 42 als gemeinsame Wand voneinander getrennt.

Um den Wärmeübergang zwischen dem Reaktionsbehältnis 20 und der Temperiersubstanz zu verbessern, sind erste Kühlrippen 34 an der Wand 22 angeordnet, die tief in das Temperierbehältnis 30 hineinragen. Ebenfalls sind zweite Kühlrippen 35 an dem Rohr 42 angeordnet, die ebenfalls tief in das Temperierbehältnis 30 hineinragen. Die zweiten Kühlrippen 35 erhöhen die Oberfläche zwischen dem Flüssigkeitsbehältnis 40 und der Temperiersubstanz und ermöglichen hiermit einen besseren Wärmeübergang zwischen dem Flüssigkeitsbehältnis 40 und der Temperiersubstanz. Dritte Kühlrippen 27 reichen von einer inneren Oberfläche 23 des Reaktionsbehältnisses 20 in das Reaktionsbehältnis 20 hinein und sorgen so für eine bessere Wärmeübertragung von der Prozessmasse zu dem Reaktionsbehältnis 20.

Um das Temperierbehältnis 30 herum ist ein Druckbehälter 50 angeordnet, der innen eine Isolationsschicht 51 aufweist. Die Anordnung des Druckbehälters 50 um das Temperierbehältnis 30 ermöglicht, dass im Reaktionsbehältnis 20 einen Druck von 2 MPa für die erste Teilreaktion aufgebaut werden kann, ohne dass ein dickwandiges Reaktionsbehältnis den Wärmeübergang zur Temperiersubstanz erschwert. Zudem sorgt die Isolationsschicht 51 dafür, dass kaum Wärme an eine Umgebung 14 abgegeben wird.

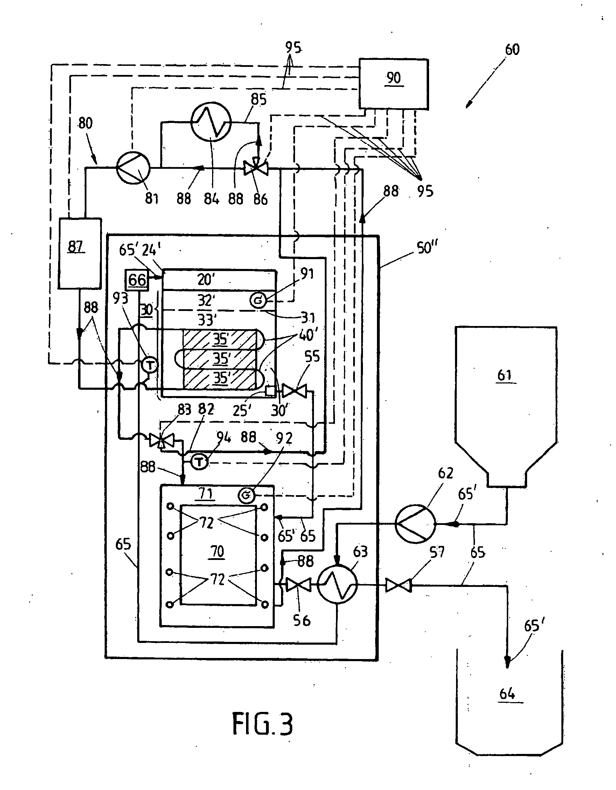

Die Abgabe von Wärme von der Temperiersubstanz an die Temperierflüssigkeit kann über den Temperaturgradienten zwischen der Temperiersubstanz und der Temperierflüssigkeit beeinflusst werden. Hierzu können eine Eintrittstemperatur und ein Durchsatz der Temperierflüssigkeit von einer in Fig. 3 dargestellten Steuer- und/oder Regeleinheit 90 gesteuert und/oder geregelt werden.

Vor Beginn der ersten Teilreaktion kann die Prozessmasse von der Temperiersubstanz erwärmt werden. Hierzu gibt die Temperiersubstanz Schmelzwärme an die Prozessmasse ab, wobei die Temperiersubstanz teilweise erstarrt.

Das Reaktionsbehältnis 20 kann in Schlaufen verlegt sein (nicht dargestellt). Hierbei kann insbesondere ein Abschnitt des Reaktionsbehältnisses 20, in dem eine besonders exotherme Reaktion zu erwarten ist, nahe dem Abschnitt des Reaktionsbehältnisses 20, in dem die Prozessmasse in das Reaktionsbehältnis 20 eintritt, liegen. In Kehren der Schlaufen können Überdruckventile oder Membrane vorgesehen sein. Die Membrane können zum Abtrennen von Gasen, flüssigem Wasser oder Produkten der exothermen Reaktion dienen.

Außen an dem Reaktionsbehältnis 20 sind zwei Piezoelemente 26 angeordnet, die die Wand 22, die ersten Kühlrippen 34 und die dritten Kühlrippen 27 in Schwingungen gemäß den Pfeilen 28 versetzen. Durch die Schwingungen der Wand 22 und der dritten Kühlrippen 27 wird die Prozessmasse in der Nähe der Wand 22 und der dritten Kühlrippen 27 in Turbulenzen versetzt und durchmischt. Analog wird durch die Schwingungen der Wand 22 und der ersten Kühlrippen 34 die flüssige Phase der Temperiersubstanz 32 in der Nähe der Wand 22 und der ersten Kühlrippen 34 in Strömung, insbesondere Turbulenzen versetzt und somit durchmischt. Die Piezoelemente 26 dienen somit zugleich als erste und als zweite Schwingungsvorrichtung.

Das Reaktionsbehältnis 20 mit der Prozessmasse, das Temperierbehältnis 30 mit der Temperiersubstanz, das Flüssigkeitsbehältnis 40 mit der Temperierflüssigkeit, und die in Fig. 3 dargestellte Steuer-und/oder Regelungseinheit 90 bilden zusammen ein Ausführungsbeispiel für eine erfindungsgemäße Temperiervorrichtung 10.

In den Figuren 1a und 1b ist das erste Ausführungsbeispiel der erfindungsgemäßen Temperiervorrichtung 10 leicht modifiziert worden, wobei im Folgenden nur auf die Unterschiede zu Fig. 1 eingegangen wird. In den Figuren 1a und 1b ist dieselbe Temperiervorrichtung 10 dargestellt, wobei Fig. 1b ein Schnitt entlang der Linie B-B aus Fig. 1a und Fig. 1a ein Schnitt entlang der Linie A-A zeigt.

In den Figuren 1a und 1b ist das Reaktionsbehältnis 20 um 90° gedreht. Parallel zur Erdanziehungskraft verlaufende, erste Kühlrippen 34 ragen von dem Reaktionsbehältnis 20 in das Temperierbehältnis 30 hinein. Parallel, aber beabstandet von den ersten Kühlrippen 34 sind in dem Temperierbehältnis 30 zweite Kühlrippen 35 angeordnet, die im direkten Kontakt mit dem Flüssigkeitsbehältnis 40 stehen. Die Fließrichtungen der Prozessmasse und der Temperierflüssigkeit sind senkrecht zu der in Fig. 1a dargestellten Ebene. Dritte Kühlrippen 27 befinden sich, ebenfalls parallel zur Erdanziehungskraft angeordnet, in dem Reaktionsbehältnis 20. Um eine Volumenänderung der Temperiersubstanz beim Schmelzen bzw. Erstarren zu ermöglichen, ist ein Gas 37 in dem Temperierbehältnis 30 vorgesehen. Hierdurch ergeben sich zwei zusätzliche Phasengrenzen: eine Phasengrenze 32" zwischen der flüssigen Phase 32 der Temperiersubstanz und dem Gas 37 und eine Phasengrenze 33" zwischen der festen Phase 33' der Temperiersubstanz und dem Gas 37. Schmilzt ein weiterer Teil der festen Phase 33' der Temperiersubstanz, so verschieben sich alle drei Phasengrenzen 31', 32'', 33". Insbesondere verschiebt sich die Phasengrenze 32" nach oben, so dass die flüssige Phase 32 der Temperiersubstanz das Reaktionsbehältnis 20 vermehrt umgibt und temperieren kann.

In einem nicht dargestellten alternativen Ausführungsbeispiel wiederholt sich die Anordnung der ersten, zweiten und dritten Kühlrippen 27, 34, 35 und des Flüssigkeitsbehältnisses 40 auf der in Fig. 1a rechts dargestellten Seite des Reaktionsbehältnisses. Hierbei ist die Anordnung der ersten bis dritten Kühlrippen 27, 34, 35 und des Flüssigkeitsbehältnisses 40 spiegelbildlich zu einer Spiegelachse S.

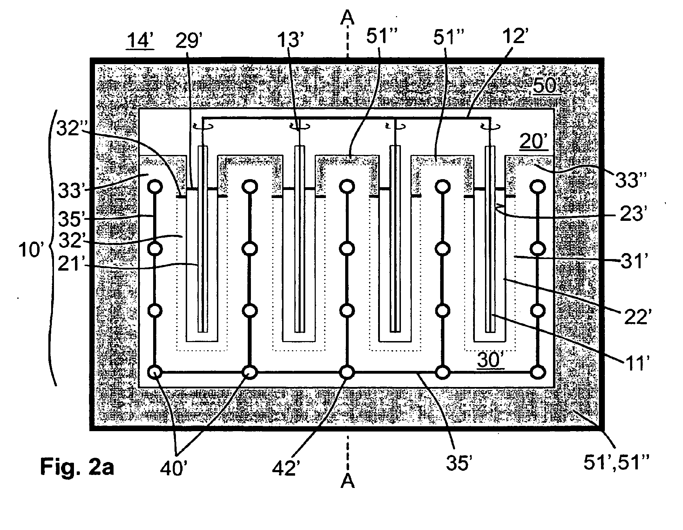

In Fig. 2 ist ein weiteres Ausführungsbeispiel einer erfindungsgemäßen Temperiervorrichtung 10' für eine erste Teilreaktion der hydrothermalen Karbonisierung verdeutlicht. Analoge Einrichtungen aus Fig. 1 werden mit denselben, mit Strichen versehenen Bezugszeichen der Fig. 1 versehen.

In Fig. 2 ist wie in Fig. 1 ein Querschnitt durch ein Reaktionsbehältnis 20', ein Temperierbehältnis 30', ein Flüssigkeitsbehältnis 40' und einen Druckbehälter 50' dargestellt. Der Querschnitt des Reaktionsbehältnisses 20' weist eine kammartige Form auf. Hierdurch verringert sich das Volumen zu Oberflächenverhältnis des Reaktionsbehältnisses 20', so dass die Gefahr von Überhitzungen innerhalb der Prozessmasse sinkt. Das Reaktionsbehältnis 20' in Fig. 2 weist beispielhaft vier als rechteckige Einbuchtungen ausgeformte Zinken 21' auf. Eine so als Zinken 21' ausgeformte Wand 22' des Reaktionsbehältnisses 20' dient zugleich als Wand des Temperierbehältnisses 30'. Hierdurch ergibt sich eine große Wärmeaustauschfläche, so dass im Ausführungsbeispiel von Fig. 2 auf erste und dritte Kühlrippen verzichtet wird. Die Wand 22' kann auf einer zum Reaktionsbehältnis 20' zeigenden Oberfläche 23' mit einem Oberflächenkatalysator zum Katalysieren der ersten Teilreaktion versehen sein.

Die Temperierflüssigkeit wird in mindestens einem Rohr 42' des Temperierbehältnisses 40' geführt. Dabei kann es sich um ein in Schlaufen gelegtes Rohr 42', insbesondere mäanderförmige Rohre 42', handeln und/oder um strömungstechnisch parallel geführte Rohre 42'. Parallel geführte Rohre 42' können von der Temperierflüssigkeit im Gleich- oder im Gegenstrom zu einer eventuellen Bewegungsrichtung der Prozessmasse im Reaktionsbehältnis 20' durchflossen werden. Die Rohre 42' untereinander werden mit zweiten Kühlrippen 35' verbunden.

Zur besseren Durchmischung der Prozessmasse sind in dem Reaktionsbehältnis 20' erste Durchmischungsflächen 11' angeordnet, die sich über ein schematisch angedeutetes gemeinsames Rührwerk 12' gemäß den Pfeilen 13' rotieren und/oder sich senkrecht zur Zeichenebene translatorisch bewegen können. Das Rührwerk 12' ist über einer Oberfläche 29', die eine Phasengrenze zwischen flüssigem Wasser in der Biomasse und Wasserdampf bildet, im Wasserdampf angeordnet.

Das Reaktionsbehältnis 20' in Fig. 2 kann für einen diskontinuierlichen oder kontinuierlichen Prozess geeignet sein. Das Reaktionsbehältnis 20' kann unterhalb oder oberhalb des Temperierbehältnisses 30' angeordnet sein.

In Fig. 2a ist die in Fig. 2 dargestellte Temperiervorrichtung 10 leicht abgewandelt worden, wobei im Folgenden nur auf die Unterschiede zu Fig. 2 eingegangen wird.

Das Temperierbehältnis 30' steht im Druck und Stoffaustausch mit der gasdurchlässigen Isolationsschicht 51' des Druckbehälters 50'. Hierdurch kann ein Inertgas 51 ", mit welchem die Isolationsschicht 51' geflutet ist, von der Isolationsschicht 51' in das Temperierbehältnis 30' bzw. aus dem Temperierbehältnis 30' in die Isolationsschicht 51' gelangen und bildet in dem Temperierbehältnis 30' eine gasförmige Phase. Das Gas in dem Temperierbehältnis 30'entspricht somit dem Inertgas 51" der Isolationsschicht 51'. In dem Temperierbehältnis 30' existieren nun wie in Fig. 1a, 1b drei Phasengrenzen 31', 32", 33": die Phasengrenze 31' zwischen der festen Phase 33'und der flüssigen Phase 32' der Temperiersubstanz, eine Phasengrenze 32" zwischen der flüssigen Phase 32' der Temperiersubstanz und dem Inertgas 51" und eine Phasengrenze 33" zwischen der festen Phase 33' der Temperiersubstanz und dem Inertgas 51 ". Schmilzt ein weiterer Teil der festen Phase 33' der Temperiersubstanz, so verschieben sich alle drei Phasengrenzen 31', 32", 33". Durch die geringere Dichte der flüssigen Phase 32' im Vergleich zu der festen Phase 33', steigt das gesamte Volumen, das die Temperiersubstanz einnimmt. Die Phasengrenze 32" verschiebt sich in Fig. 2a nach oben. Die Lage der Oberfläche 29' wird in etwa so gewählt, dass sie der Phasengrenze 32" entspricht.

In Fig. 3 ist eine schematische Skizze eines ersten Ausführungsbeispiels einer erfindungsgemäßen Karbonisierungsanlage 60 dargestellt. Zunächst wird die zu verwertende Biomasse in einem Vorbehandlungsbehältnis 61 mit Wasser versetzt und entlüftet, so dass die Biomasse weitestgehend sauerstofffrei ist. Grobe Festkörper werden entfernt. Die so enthaltene Prozessmasse wird durch eine Pumpvorrichtung 62 in den Druckbehälter 50" überführt, wobei gleichzeitig der Druck der Prozessmasse steigt. Die Prozessmasse durchläuft einen Wärmetauscher 63, in dem die Prozessmasse erwärmt wird. Danach wird die Prozessmasse in ein erstes Reaktionsbehältnis 20' überführt, in dem die erste Teilreaktion der hydrothermalen Karbonisierung stattfindet. Kurz zuvor kann eine Heizvorrichtung 66 die Prozessmasse weiter erwärmen. Die Prozessmasse wird an einem Anfang 24' des ersten Reaktionsbehältnisses 20' in das erste Reaktionsbehältnis 20' eingeführt und verlässt das erste Reaktionsbehältnis 20' an einem Ende 25' des ersten Reaktionsbehältnisses 20', wobei das Ende 25' als ein unten angeordneter Abfluss an einem Ende des Reaktionsbehältnisses 20' ausgebildet ist. Nach Durchlaufen des ersten Reaktionsbehältnisses 20' wird die Prozessmasse in ein zweites Reaktionsbehältnis 70 überführt, in dem die Prozessmasse eine zweite, schwach exotherme Teilreaktion der hydrothermalen Karbonisierung durchläuft, die eine Ausfällungsreaktion z.B. von Kohle als Produkt beinhaltet. Die Reaktionstemperatur der ersten Teilreaktion ist größer als oder gleich hoch wie die Reaktionstemperatur der zweiten Teilreaktion. So können die Reaktionstemperatur der ersten Teilreaktion z.B. bei 200 °C und die Reaktionstemperatur der zweiten Teilreaktion bei 180 °C liegen.

Die Prozessmasse verlässt das zweite Reaktionsbehältnis 70, um in dem Wärmetauscher 63 die Prozessmasse vor Eintritt in das erste Reaktionsbehältnis 20' vorzuwärmen. Die Prozessmasse wird danach in mindestens ein Auffangbehältnis 64 überführt, wo die Produkte entnommen werden können. Ventile 55, 56, 57, die jeweils am Ausgang des ersten Reaktionsbehältnisses 20', des zweiten Reaktionsbehältnisses 70 bzw. des Wärmetauschers 63 befinden, können jeweils den Durchfluss und/oder die Aufenthaltsdauer der Prozessmasse in den jeweiligen Behältnissen 20', 70, 63 einstellen. Der Weg der Prozessmasse durch die Karbonisierungsanlage 60 ist schematisch durch Strömungswege 65 gemäß Pfeile 65' dargestellt. Die Prozessmasse kann dem ersten Reaktionsbehältnis 20' und/oder dem zweiten Reaktionsbehältnis 70 jeweils kontinuierlich oder diskontinuierlich zu- und abgeführt werden. Es ist denkbar, dass es sich bei dem ersten Reaktionsbehältnis 20' um einen kontinuierlich betriebenen Rohrreaktor und beim zweiten Reaktionsbehältnis 70 um ein diskontinuierlich betriebenen Reaktor handelt. Hierbei sind mehrere zweite Reaktionsbehältnisse 70 strömungstechnisch parallel angeordnet. Handelt es sich alternativ bei dem zweiten Reaktionsbehältnisses 70 ebenfalls um einen kontinuierlich betriebenen Rohrreaktor, so kann durch einen großen Durchmesser des zweiten Reaktionsbehältnisses 70 eine langsame, eine Ausfallreaktion begünstigende Strömung eingestellt werden.

Das erste Reaktionsbehältnis 20', ein erstes Temperierbehältnis 30', ein erstes Flüssigkeitsbehältnis 40' für die erste Teilreaktion werden -wie in Fig. 2 beschrieben- ausgeführt, sind daher mit den gleichen Bezugszeichen versehen und sind in Fig. 3 im Längsschnitt entlang der Linie A-A der Fig. 2 dargestellt. Das Flüssigkeitsbehältnis 40' ist dabei schlaufenförmig ausgeführt. Selbstverständlich kann auch das Ausführungsbeispiel aus Fig. 1 als erste Temperiervorrichtung 10 verwendet werden.

Um das zweite Reaktionsbehältnis 70 ist ein zweites Temperierbehältnis 71 angeordnet, in dem sich eine zweite Temperiersubstanz befindet. Die zweite Temperiersubstanz hält die Reaktionstemperatur in dem zweiten Reaktionsbehältnis 70 konstant, indem die zweite Temperiersubstanz den Wärmeverlust der Prozessmasse ausgleicht und dabei selber erstarrt und/oder Wärme aus der schwach exothermen Reaktion aufnimmt und dabei schmilzt. Um ein Vorliegen der festen und der flüssigen Phase in dem zweiten Temperierbehältnis 71 und damit eine konstante Temperatur der zweiten Temperiersubstanz sicherzustellen, steht die zweite Temperiersubstanz in thermischen Kontakt mit der Temperierflüssigkeit in einem rohrförmigen Flüssigkeitsbehältnis 72, das sich innerhalb des zweiten Temperierbehältnisses 71 windet. Das zweite Reaktionsbehältnis 70, das zweite Temperierbehältnis 71 und das Flüssigkeitsbehältnis 72 sind in Fig. 3 im Längsschnitt dargestellt.

Die Temperierflüssigkeit wird in einem geschlossenen Kreislauf 80 geführt. Mögliche Strömungspfade der Temperierflüssigkeit sind hierbei mit Pfeilen 88 dargestellt. Eine Pumpe 81 pumpt die Temperierflüssigkeit durch den Kreislauf 80. Das erste Flüssigkeitsbehältnis 40' und das zweite Flüssigkeitsbehältnis 72 sind dabei Teil des Kreislaufes 80. Die Temperierflüssigkeit fließt zunächst durch das erste Flüssigkeitsbehältnis 40', erwärmt sich dabei und gibt anschließend einen Teil der Wärme im zweiten Flüssigkeitsbehältnis 72 an die zweite Temperiersubstanz ab. Alternativ kann die Temperierflüssigkeit nur durch das erste Flüssigkeitsbehältnis 40' strömen, um eine bessere Temperierung der ersten Temperiersubstanz zu ermöglichen. So kann es z.B. sein, dass die Temperatur der Temperierflüssigkeit niedrig eingestellt wird, um einen guten Wärmegradienten und damit einen erhöhten Wärmefluss zwischen der Temperierflüssigkeit und der ersten Temperiersubstanz zu erzeugen. Eine derart kalte Temperierflüssigkeit kann aber die zweite Temperiersubstanz nicht mehr erwärmen. Eine permanente Führung der Temperierflüssigkeit durch das zweite Flüssigkeitsbehältnis ist auf Grund der puffernden Wirkung der zweiten Temperiersubstanz auch gar nicht notwendig. Ein von einem 3/2 Wegeventil 83 abzweigender Bypass 82 ermöglicht, dass die Temperierflüssigkeit nur durch das erste Flüssigkeitsbehältnis 40' geführt werden kann.

Um die Temperierflüssigkeit wieder kühlen zu können, ist eine Wärmetauschvorrichtung 84 in einem strömungstechnisch parallelen Strömungspfad 85, der durch ein 3/2 Wegeventil 86 von dem Kreislauf 80 abzweigt, angeordnet. In der Wärmetauschvorrichtung 84 gibt die Temperierflüssigkeit Wärme an eine Warmwasserversorgung eines Haushaltes ab. Strömungstechnisch parallel oder in Reihe können weitere Kühlvorrichtungen vorgesehen sein (nicht dargestellt). Eine Heizung 87 wird eingeschaltet, wenn die Temperierflüssigkeit Wärme auf die erste Temperiersubstanz übertragen soll, insbesondere vor dem ersten Beginn der hydrothermalen Karbonisierung.

Alternativ zu dem in Fig. 3 dargestellten, geschlossenen Kreislauf 80 ist ein nicht dargestellter zumindest partiell offener Kreislauf denkbar, wenn Wasser als Temperierflüssigkeit verwendet wird. So kann Wasser als aus dem öffentlichen Leitungssystem zum Kühlen in den Kreislauf eingebracht werden und andererseits Wasser beim Austritt aus dem Kreislauf beispielsweise eine Turbine antreiben, wobei die Turbine mit der Pumpe 81 gekoppelt sein kann.

Durch schematisch dargestellte elektrische Leitfähigkeitsmesseinrichtungen 91, 92 in der ersten und zweiten Temperiersubstanz ermittelt eine Steuer- und/oder Regelungseinheit 90 den Anteil der flüssigen Phase der ersten und zweiten Temperiersubstanz. Weitere Informationen erhält die Steuer- und/oder Regelungseinheit 90 von Temperaturmesseinrichtungen 93, 94, mit der die Temperatur der Temperierflüssigkeit vor Eintritt in das erste und das zweite Flüssigkeitsbehältnis 40', 72 gemessen wird. Die Steuer- und/oder Regelungseinheit 90 stellt nun automatisch die 3/2 Wegeventile 83, 86, die elektrische Leistung der Pumpe 81 und die Heizung 87 so ein, dass die erste und die zweite Temperiersubstanz während der gesamten Prozessdauer sowohl in der flüssigen als auch in der festen Phase vorliegen. Hierbei ist die Steuer- und/oder Regelungseinheit 90 durch Leitungen 95 mit den Messeinrichtungen 91, 92, 93, 94, den 3/2-Wegeventilen 83, 86, der Pumpe 81 und der Heizung 87 verbunden.

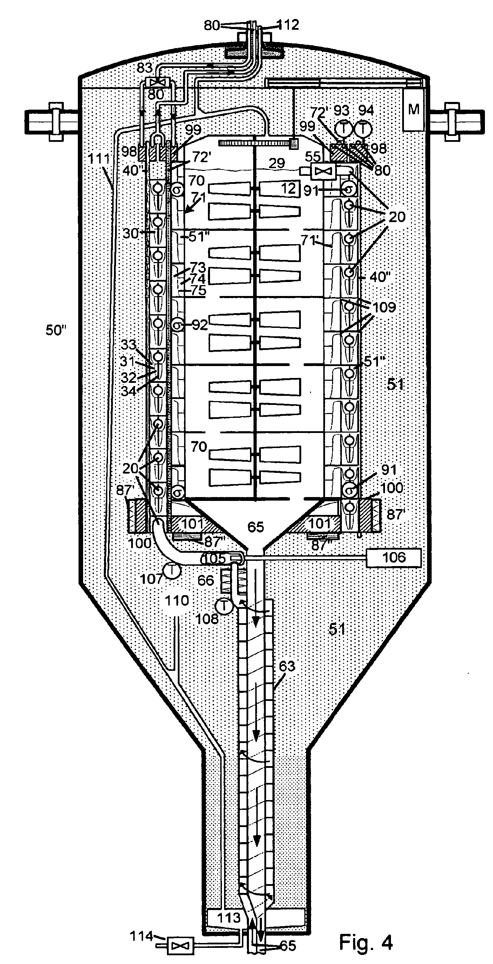

In Fig. 4 ist ein zweites Ausführungsbeispiel einer erfindungsgemäßen Karbonisierungsanlage 60 dargestellt. Hierbei ist das zweite Reaktionsbehältnis 70 für die zweite Teilreaktion der hydrothermalen Karbonisierung von dem ersten Reaktionsbehältnis 20 für die erste Teilreaktion der hydrothermalen Karbonisierung umgeben, wobei sich das erste Reaktionsbehältnis 20 spiralförmig um das zweite Reaktionsbehältnis 70 windet.

Zunächst wird die Prozessmasse in dem zweiten Ausführungsbeispiel der Karbonisierungsanlage wie auch in dem ersten Ausführungsbeispiel der Karbonisiserungsanlage in einem in Fig. 4 nicht dargestelltem Vorbehandlungsbehältnis 61 vorbehandelt und durch eine in Fig. 4 nicht dargestellte Pumpvorrichtung 62 in den Wärmetauscher 63 überführt. In dem Wärmetauscher 63 wird die eintretende Prozessmasse spiralförmig um die aus dem zweiten Reaktionsbehältnis 70 austretende Prozessmasse geführt, wobei die eintretende Prozessmasse erwärmt wird. Anschließend kann die eintretende Prozessmasse in einer Heizvorrichtung 66 weiter erwärmt werden. Anschließend wird die Prozessmasse in einen Beschallungsbereich 105 am Anfang des ersten Reaktionsbehältnisses 20 überführt und Ultraschallwellen aus einem Ultraschallgerät 106 ausgesetzt. Hierdurch wird die Prozessmasse disorganisiert, homogenisiert und durch die Aufnahme der Schallenergie, insbesondere inhomogene Bereiche der Prozessmasse, erwärmt, womit die Hydrolyse der Cellulose unterstützt wird, welche erst bei Temperaturen oberhalb 200°C einsetzt. Die Temperaturen der Prozessmasse vor der Heizvorrichtung 66 und in dem Beschallungsbereiches 105 werden durch Temperaturmesseinrichtungen 107 bzw. 108 bestimmt und an eine nicht dargestellte Steuer- und/oder Regelungseinheit übergeben. Zur Regulierung des Durchflusses und des Druckes der Prozessmasse vom ersten Reaktionsbehältnis 20 in das zweiten Reaktionsbehältnis 70 ist ein Ventil 55 vorgesehen. Ein Rührwerk 12 in dem zweiten Reaktionsbehältnis 70 zur besseren Durchmischung der Prozessmasse wird von einem Motor M angetrieben.

Das erste Reaktionsbehältnis 20 wird von einem ersten, spiralförmigen Temperierbehältnis 30 umgeben. Erste Kühlrippen 34 ragen von dem ersten Reaktionsbehältnis 20 in das erste Temperierbehältnis 30 hinein. An den senkrecht nach unten weisenden Kühlrippen 34 befindet sich die flüssige Phase 32 einer ersten Temperiersubstanz, durch eine Phasengrenze 31 von der festen Phase 33 der ersten Temperiersubstanz getrennt. Nicht dargestellte Wände im Temperierbehältnis 30 segmentieren das Temperierbehältnis 30 und verhindern, dass die flüssige Temperiersubstanz sich nur in einem unteren Teil des Temperierbehältnisses ansammelt.

An das Temperierbehältnis 30 grenzt außen das erste Flüssigkeitsbehältnis 40 an, das als eine erste Vielzahl rohrförmige heat pipes 40" ausgebildet ist. Die heat pipes 40" sind am äußeren Umfang des Temperierbehältnisses 30 in gleichmäßigem radialen Abstand verteilt.

Ebenfalls sind am inneren Umfang des Temperierbehältnisses 30 eine zweite Vielzahl von rohrförmigen heat pipes 72" als ein zweites Flüssigkeitsbehältnis 72 angeordnet. Die heat pipes 72" sind am inneren Umfang des Temperierbehältnisses 30 in gleichmäßigen radialen Abständen angeordnet. Zugleich ist die zweite Vielzahl von heat pipes 72" am äußeren Umfangsrand eines zweiten Temperierbehältnisses 71, das in einzelne Ringe 71'unterteilt ist, angeordnet. Hierbei dient das zweite Temperierbehältnis 71 zum Temperieren der zweiten Teilreaktion im zweiten Reaktionsbehältnis 70. Hierzu ist in dem zweiten Temperierbehältnis 71 eine zweite Temperiersubstanz angeordnet, die zumeist in einer festen Phase 73, in einer flüssigen Phase 74 mit einer dazwischen liegenden Phasengrenze 75 vorliegt. Durch die zweite Vielzahl von heat pipes 72" wird sowohl die erste als auch die zweite Temperiersubstanz temperiert.

Der Anteil der flüssigen ersten bzw. zweiten Temperiersubstanz wird durch elektrische Leitfähigkeitmesseinrichtungen 91, 92 bestimmt, wobei die gemessenen elektrischen Leitfähigkeiten an eine nicht dargestellte Steuer- und/oder Regelungseinheit übermittelt werden.

Die heat pipes 40" münden an ihrem oberen Ende in einen ersten ringförmigen Wärmeübertrager 98, z.B. aus Aluminium, der von einer Temperierflüssigkeit des in Fig. 4 nur teilweise dargestellten Kreislaufes 80 durchflossen werden kann und damit den heat-pipes 40" über den ersten Wärmeüberträger 98 Wärme entzogen werden kann, wobei die Durchflussrate der Temperierflüssigkeit durch ein 3/2 Wegeventil 83 einstellbar ist. Für den Kreislauf 80 gelten ansonsten die in Fig. 3 dargestellten Merkmale, wobei auf die Heizung 87 verzichtet werden kann.

Ebenfalls münden die heat pipes 72" an ihrem oberen Ende in einen zweiten ringförmigen Wärmeübertrager 99, über den den heat pipes 72" durch die Temperierflüssigkeit des Kreislaufes 80 ebenfalls Wärme entzogen werden kann. Der Anteil der Temperierflüssigkeit des Kreislaufes 80, der den zweiten Wärmeüberträger 99 durchströmen kann, ist durch das 3/2 Wegeventil 83 einstellbar.

Die Temperaturen der ersten und zweiten Wärmeübertrager 98, 99 können durch Temperaturmesseinrichtungen 93, 94 bestimmt und an eine nicht dargestellte Steuer- und/oder Regelungseinheit übermittelt werden.

Am unteren Ende der heatpipes 40", 72" sind ebenfalls ringförmige Wärmeübertrager 100, 101 angeordnet. Hierbei dient der dritte Wärmeübertrager 100 zum Temperieren, insbesondere Erwärmen, der heat pipes 40" und der vierte Wärmeübertrager 101 zum Temperieren, insbesondere Erwärmen, der heat pipes 72". Hierzu ist eine Heizung 87' an dem dritten Wärmeübertrager 100 und eine Heizung 87" an dem vierten Wärmeübertrager 101 angeordnet. Diese ersetzen die Heizung 87 aus Fig 3.

Die Reaktionsbehältnisse 20, 70, die Temperierbehältnisse 30, 71 und die Flüssigkeitsbehältnisse 40", 72", die ersten bis vierten Wärmeüberträger 98, 99, 100, 101 und der Wärmetauscher 63 sind von einem Druckbehälter 50 umgeben, in dem sich ein Inertgas 51 " in einer Isolationsschicht 51 befindet. Zwischen der Isolationsschicht 51 und den Temperierbehältnissen 30, 71 ist ein stofflichen Austausch möglich, so dass sich innerhalb der Temperierbehältnisse 30, 71 eine gasförmige Phase des Inertgases 51 " ausgebildet hat. Um den Stoffaustausch zwischen den Temperierbehältnissen 30, 71 und der Isolationsschicht 51 zu ermöglichen, sind die Temperierbehältnisse 30, 71 als offene Behältnisse ausgebildet, die einen Durchlass 109 zu der Isolationsschicht 51 aufweisen.

An dem zweiten Reaktionsbehältnis 70 ist eine Druckausgleichsleitung 111 angeordnet, von der eine Überdruckausgleichsleitung 112 zu einem nicht dargestellten Überdruckventil abzweigt, welches im Falle einer Überhitzung der Prozessmasse und/oder einer zu starken Druckerhöhung in dem ersten oder zweiten Reaktionsbehältnis 20, 70 Wasserdampf und/oder weitere Gase der Prozessmasse ableiten kann. Für die reguläre Entnahme der bei der Reaktion entstehenden Gase, vor allem CO₂, führt die Druckausgleichsleitung 111 über einen langen Weg mit zunehmenden Abstand zum ersten Reaktionsbehältnis 20 innerhalb des Druckbehälters 50, damit evtl. vorhandene Reste von Wasserdampf in der Druckausgleichsleitung 111 kondensieren, zu einem Druckausgleichsraum 110 innerhalb des Druckbehälters 50. Hierbei kann der Druckausgleichsraum 110 einen stofflichen Austausch zwischen dem Druckbehälter 50 und dem zweiten Reaktionsbehältnis 70 zulassen und insbesondere dem Druckbehälter 50 entsprechen. Alternativ kann der Druckausgleichsraum 110 durch flexible Wände räumlich getrennt von dem Druckbehälter 50 sein und nur einen Druckausgleich, nicht jedoch einen Stoffaustausch zulassen. Die Druckausgleichsleitung 111 führt in ein Kondensatbehältnis 113, in dem sich das in der Druckausgleichsleitung 111 kondensierte Wasser sammeln kann, ohne in den Druckausgleichsraum 110 zu gelangen. Durch ein Ventil 114 kann das kondensierte Wasser und das bei der Reaktion entstehende Gas, und im Falle eines Stoffaustausches zwischen dem Druckausgleichsraum 110 und dem Druckbehälter 50 das Inertgas 51 " der Isolationsschicht 51 abgelassen werden.

Die nicht dargestellte Steuer- und/oder Regelungseinheit verwendet die übermittelten Werte der elektrischen Leitfähigkeit und die Temperaturen, um zumindest einen Teil der Ventile 55, 83, 114, Heizungen 87',87" und/oder die Heizvorrichung 66 automatisch einzustellen.

### Bezugszeichenliste

- 10, 10': Temperiervorrichtung
- 11': erste Durchmischungsfläche
- 12': Rührwerk
- 13': Pfeile
- 14, 14': Umgebung

- 20, 20': Reaktionsbehältnis
- 21: Zinken
- 22, 22': Wand von 20'
- 23, 23': Oberfläche von 22'
- 24': Anfang von 20'
- 25': Ende von 20'
- 26: Piezoelement
- 27: dritte Kühlrippen
- 28: Pfeile
- 29, 29': Oberfläche der Prozessmasse

- 30, 30': Temperierbehältnis
- 31, 31': Phasengrenze zwischen 32, 32' und 33, 33'
- 32, 32': flüssige Phase der Temperiersubstanz
- 32": Phasengrenze zwischen 32, 32' und 51"
- 33, 33': feste Phase der Temperiersubstanz
- 33": Phasengrenze zwischen 33, 33' und 51"
- 34: erste Kühlrippen
- 35, 35': zweite Kühlrippen
- 37: Gas

- 40, 40': Flüssigkeitsbehältnis
- 40": heat pipes
- 41: Pfeil
- 42, 42': Rohr

- 50, 50', 50": Druckbehälter
- 51, 51': Isolationsschicht
- 51": Inertgas
- 55: Ventil
- 56: Ventil
- 57: Ventil

- 60: Karbonisierungsanlage
- 61: Vorbehandlungsbehältnis
- 62: Pumpvorrichtung
- 63: Wärmetauscher
- 64: Auffangbehältnis
- 65: Strömungswege
- 65': Pfeile
- 66: Heizvorrichtung

- 70: zweites Reaktionsbehältnis
- 71: zweites Temperierbehältnis
- 71': Ring von 71
- 72: zweites Flüssigkeitsbehältnis
- 72'': heat pipes
- 73: feste Phase einer zweiten Temperiersubstanz
- 74: flüssige Phase der zweiten Temperiersubstanz
- 75: Phasengrenze zwischen 73 und 74

- 80: Kreislauf
- 81: Pumpe
- 82: Bypass
- 83: 3/2 Wegeventil
- 84: Wärmetauschvorrichtung
- 85: Strömungspfad
- 86: 3/2 Wegeventil
- 87,87',87": Heizung
- 88: Pfeile

- 90: Steuer und/oder Regelungseinheit
- 91: elektrische Leitfähigkeitsmesseinrichtung
- 92: elektrische Leitfähigkeitsmesseinrichtung
- 93: Temperaturmesseinrichtung
- 94: Temperaturmesseinrichtung
- 95: Leitung
- 98: erster Wärmeübertrager
- 99: zweiter Wärmeübertrager

- 100: dritter Wärmeübertrager
- 101: vierter Wärmeübertrager
- 105: Beschallungsbereich von 20
- 106: Ultraschallgerät
- 107: Temperaturmesseinrichtung
- 108: Temperaturmesseinrichtung
- 109: Durchlass

- 110: Druckausgieichsraum
- 111: Druckausgleichsleitung
- 112: Überdruckausgleichsleitung zu einem Überdruckventil
- 113: Kondensatbehältnis
- 114: Ventil

- M: Motor
- S: Spiegelachse

## Patentansprüche

1. Verfahren zum Temperieren einer exothermen Reaktion, insbesondere mindestens einer Teilreaktion einer hydrothermalen Karbonisierung,
wobei die exotherme Reaktion in einem Reaktionsbehältnis (20, 20',70) durchgeführt wird, wobei sich eine sich der exothermen Reaktion unterziehende Reaktionsmischung als Prozessmasse im Reaktionsbehältnis befindet, und
wobei die exotherme Reaktion durch mindestens eine Temperiersubstanz, die in einem Temperierbehältnis (30, 30', 71) angeordnet ist, zumindest teilweise temperiert wird,
wobei Wärme zwischen der Temperiersubstanz und mindestens einer von der Temperiersubstanz stofflich getrennten Temperierflüssigkeit austauschbar ist,
**dadurch gekennzeichnet,**
**dass** ein Flüssigkeitsbehältnis (40, 40', 72), das die Temperierflüssigkeit enthält, an das Temperierbehältnis (30, 30', 71) angrenzt,
wobei bei einem Übergang von Wärme zwischen dem Reaktionsbehältnis (20, 20', 70) und der Temperiersubstanz die Temperiersubstanz zumindest teilweise einen Phasenübergang zwischen einer festen Phase (33, 33') und einer flüssigen Phase (32, 32') der Temperiersubstanz vollführt.

2. Verfahren nach Anspruch 1,
**dadurch gekennzeichnet,**
**dass** die Temperiersubstanz bei Aufnahme von Reaktionswärme der exothermen Reaktion zumindest teilweise schmilzt.

3. Verfahren nach Anspruch 1,
**dadurch gekennzeichnet,**
**dass** die in der flüssigen Temperiersubstanz enthaltene Schmelzwärme dazu verwendet wird, dem Reaktionsbehältnis (20, 20', 70) Wärme zuzuführen, insbesondere zumindest ein Edukt der exothermen Reaktion vor Beginn der exothermen Reaktion zu erwärmen, wobei die Temperiersubstanz zumindest teilweise erstarrt.

4. Verfahren nach einem der vorhergehenden Ansprüche,
**dadurch gekennzeichnet,**
**dass** die exotherme Reaktion eine erste Teilreaktion der hydrothermalen Karbonisierung ist, wobei die Reaktionswärme der ersten Teilreaktion einer zweiten Teilreaktion der hydrothermalen Karbonisierung zur Verfügung gestellt wird, um die Temperatur der zweiten Teilreaktion konstant zu halten.

5. Temperiervorrichtung (10, 10') zum Temperieren einer exothermen Reaktion, insbesondere zumindest einer Teilreaktion einer hydrothermalen Karbonisierung,
wobei die Temperiervorrichtung (10, 10') ein Reaktionsbehältnis (20, 20', 70), in dem die exotherme Reaktion bei einer Reaktionstemperatur durchführbar ist und in dem sich eine sich der exothermen Reaktion unterziehende Reaktionsmischung als Prozessmasse befindet, mindestens ein Temperierbehältnis (30, 30', 71), in dem mindestens eine Temperiersubstanz angeordnet ist, und mindestens ein Flüssigkeitsbehältnis (40, 40', 72), das eine Temperierflüssigkeit enthält, aufweist,
wobei der Schmelzpunkt der Temperiersubstanz im Temperaturbereich der Reaktionstemperatur liegt,
**dadurch gekennzeichnet,**
**dass** das Temperierbehältnis (30, 30', 71) an das Reaktionsbehältnis (20, 20', 70) grenzt, so dass die Temperiersubstanz zum Temperieren der exothermen Reaktion dient, und das Flüssigkeitsbehältnis (40, 40', 72) an das Temperierbehältnis (30, 30', 71) angrenzt.

6. Temperiervorrichtung (10, 10') nach Anspruch 5,
**dadurch gekennzeichnet,**
**dass** der Schmelzpunkt der Temperiersubstanz weniger als 50 °C, bevorzugt weniger als 25 °C und besonders bevorzugt weniger als 10°C unterhalb der Reaktionstemperatur der exothermen Reaktion liegt.

7. Temperiervorrichtung (10, 10') nach Anspruch 5 oder 6,
**dadurch gekennzeichnet,**
**dass** die Temperiersubstanz zwischen dem Reaktionsbehältnis (20, 20', 70) und der Temperierflüssigkeit angeordnet ist, so dass eine Reaktionswärme der exothermen Reaktion nur über die Temperiersubstanz an die Temperierflüssigkeit übertragbar ist.

8. Temperiervorrichtung (10, 10') nach einem der Ansprüche 5 bis 7,
**dadurch gekennzeichnet,**
**dass** die Temperiervorrichtung (10, 10') eine Steuer- und/oder Regelungseinheit (90) aufweist, die den Wärmeübertrag zwischen Temperierflüssigkeit und Temperiersubstanz so einstellt, dass die Temperiersubstanz während der exothermen Reaktion sowohl in der flüssigen Phase (32, 32') als auch in der festen Phase (33, 33') gleichzeitig vorliegt.

9. Temperiervorrichtung (10, 10') nach einem der Ansprüche 5 bis 8,
**dadurch gekennzeichnet,**
**dass** erste und/oder zweite Kühlrippen (34, 35, 35') in dem Temperierbehältnis (30, 30', 71) angeordnet sind, so dass der Wärmeübergang zwischen dem Reaktionsbehältnis (20, 20', 70) und der Temperiersubstanz und/oder der Wärmeübergang zwischen der Temperiersubstanz und dem Flüssigkeitsbehältnis (40, 40',72) erhöht wird.

10. Temperiervorrichtung (10, 10') nach einem der Ansprüche 5 bis 9,
**dadurch gekennzeichnet,**
**dass** die Temperiervorrichtung (10, 10') eine erste Schwingungsvorrichtung (26) aufweist, so dass durch die mit der erste Schwingungsvorrichtung (26) erzeugten Schwingungen die Prozessmasse durchmischt wird und/oder dass die Temperiervorrichtung eine zweite Schwingungsvorrichtung (26) aufweist, so dass durch die mit der zweiten Schwingungsvorrichtung (26) erzeugten Schwingungen die flüssige Temperiersubstanz durchmischt wird.

11. Temperiervorrichtung (10, 10') nach einem der Ansprüche 5 bis 10,
**dadurch gekennzeichnet,**
**dass** ein Druckbehälter (50, 50', 50") das Temperierbehältnis (30, 30', 71), das Reaktionsbehältnis (20, 20', 70) und das Flüssigkeitsbehältnis (40, 40', 72) umgibt, wobei insbesondere der Druckbehälter (50, 50', 50") durch eine Isolationsschicht (51) von den Behältnissen (20, 20', 30, 30', 40, 40', 70, 71, 72) getrennt ist.

12. Temperiervorrichtung (10, 10') nach einem der Ansprüche 5 bis 11,
**dadurch gekennzeichnet,**
**dass** das Reaktionsbehältnis (20, 20', 70) so aufgebaut ist, dass die exotherme Reaktion mehrstufig und/oder kontinuierlich durchführbar ist, wobei das Reaktionsbehältnis (20, 20', 70) insbesondere eine Kaskade und/oder einen Rohrreaktor ist, wobei insbesondere verschiedene Stufen und/oder verschiedene Abschnitte des Reaktionsbehältnisses (20, 20', 70) von unterschiedlichen Temperiersubstanzen umgeben sind.

13. Karbonisierungsanlage (60) mit einer Temperiervorrichtung (10, 10') nach einem der Ansprüche 5 bis 12,
**dadurch gekennzeichnet,**
**dass** das Temperierbehältnis (30, 30', 71) an ein Reaktionsbehältnis (20, 20', 70) mindestens für eine Teilreaktion der hydrothermalen Karbonisierung, insbesondere für eine erste Teilreaktion, für eine zweite Teilreaktion und/oder für die gesamte hydrothermale Karbonisierung, angrenzt, so dass die Temperiervorrichtung (10, 10') die Teilreaktion, insbesondere die erste und/oder zweite Teilreaktion und/oder die gesamte hydrothermale Karbonisierung, temperiert.

14. Karbonisierungsanlage (60) nach Anspruch 13,
**dadurch gekennzeichnet,**
**dass** Reaktionswärme der ersten Teilreaktion für die zweite Teilreaktion von der Temperiersubstanz und/oder von der Temperierflüssigkeit teilweise zur Verfügung stellbar ist, so dass eine für die zweite Teilreaktion benötigte Reaktionstemperatur einhaltbar ist.

15. Karbonisierungsanlage (60) nach einem der Ansprüche 13 oder 14,
**dadurch gekennzeichnet,**
**dass** die Karbonisierungsanlage (60) einen Wärmeaustauscher (63) aufweist, in dem zumindest ein Teil der Prozessmasse nach Austritt aus einem letzten Reaktionsbehältnis (70) die Prozessmasse vor Eintritt in das erste Reaktionsbehältnis (20, 20') erwärmt.

## Claims

1. Method for tempering an exothermic reaction, especially at least a partial reaction of a hydrothermal carbonization,
wherein the exothermic reaction is carried out in a reaction vessel (20, 20', 70), wherein the reaction vessel contains a reaction mixture as a process mass, wherein the reaction mixture undergoes the exothermic reaction, and
wherein the exothermic reaction is tempered at least partially by at least one tempering substance being placed in a tempering vessel (30, 30', 71),
wherein heat is exchangeable between the tempering substance and at least one tempering liquid which is materially separated from the tempering substance,
**characterized in that**
a liquid vessel (40, 40', 72) containing the tempering liquid is adjacent to the tempering vessel (30, 30', 71),
wherein the tempering substance processes a phase transition between a solid phase (33, 33') and a liquid phase (32, 32') of the tempering substance at least partially in case of a heat transfer between the reaction vessel (20, 20', 70) and the tempering substance.

2. Method according to claim 1, **characterized in that** the tempering substance melts at least partially by absorbing the reaction heat of the exothermic reaction.

3. Method according to claim 1, **characterized in that** melt heat of the liquid tempering substance is used for supplying heat to the reaction vessel (202, 20', 70), especially for heating at least a reactant of the exothermic reaction before the start of the exothermic reaction, wherein the tempering substance solidifies at least partially.

4. Method according to one of the preceding claims, **characterized in that** the exothermic reaction is a first partial reaction of the hydrothermal carbonization, wherein the heat of reaction of the first partial reaction is made available for a second partial reaction of the hydrothermal carbonization to keep the temperature of the second partial reaction constant.

5. Tempering device (10, 10') for tempering an exothermic reaction, especially at least a partial reaction of a hydrothermal carbonization,
wherein the tempering device (10, 10') comprises a reaction vessel (20, 20', 70), wherein the exothermic reaction can be carried out at a reaction temperature in the reaction vessel (20, 20', 70) and the reaction vessel (20, 20', 70) contains a reaction mixture as a process mass, wherein the reaction mixture undergoes the exothermic reaction,
at least one tempering vessel (30, 30', 71) comprising at least one tempering substance and at least one liquid vessel (40, 40', 72) comprising a tempering liquid,
wherein the melting point of the tempering substance is in the temperature range of the reaction temperature,
**characterized in that**
the tempering vessel (30, 30', 71) is adjacent to the reaction vessel (20, 20', 70) so that the tempering substance serves for tempering the exothermic reaction, and the liquid vessel (40, 40', 72) is adjacent to the tempering vessel (30, 30', 71).

6. Tempering device (10, 10') according to claim 5, **characterized in that** the melting point of the tempering substance is less than 50°C, preferred less than 25°C and particularly preferred less than 10°C below the reaction temperature of the exothermic reaction.

7. Tempering device (10, 10') according to claim 5 or 6, **characterized in that** the tempering substance is placed between the reaction vessel (20, 20', 70) and the tempering liquid so that a heat of reaction of the exothermic reaction is only transferable to the tempering liquid via the tempering substance.

8. Tempering device (10, 10') according to one of the claims 5 to 7, **characterized in that** the tempering device (10, 10') comprises a controlling unit which adjusts the heat transfer between the tempering liquid and the tempering substance so that the tempering substance coexists in the liquid phase (32, 32') as well as in the solid phase (33, 33') during the exothermic reaction.

9. Tempering device (10, 10') according to one of the claims 5 to 8 **characterized in that** first and/or second cooling fins (34, 35, 35') are arranged in the tempering vessel (30, 30', 71) so that the heat transfer between the reaction vessel (20, 20', 70) and the tempering substance and/or the heat transfer between the tempering substance and the liquid vessel (40, 40', 72) is increased.

10. Tempering device (10, 10') according to one of the claims 5 to 9 **characterized in that** the tempering device (10, 10') comprises a first oscillation device (26) so that the process mass is mixed by oscillations generated by the first oscillation device (26) and/or that the tempering device comprises a second oscillation device (26) so that the liquid tempering substance is mixed by oscillations generated by the second oscillation device (26).

11. Tempering device (10, 10') according to one of the claims 5 to 10, **characterized in that** a pressure container (50, 50', 50") surrounds the tempering vessel (30, 30', 71), the reaction vessel (20, 20', 70) and the liquid vessel (40, 40', 72), wherein especially the pressure container (50, 50', 50") is separated from the vessels (20, 20', 30, 30', 40, 40', 70, 71, 72) by an insulation layer (51).

12. Tempering device (10, 10') according to one of the claims 5 to 11, **characterized in that** the reaction vessel (20, 20', 70) is built **in that** way that the exothermic reaction can be carried out in multiple stages and/or continuously wherein especially the reaction vessel (20, 20', 70) is a cascade and/or a tubular reactor, wherein especially various stages and/or various sections of the reaction vessel (20, 20', 70) are surrounded by different tempering substances.

13. Carbonization plant (60) with a tempering device (10, 10') according to one of the claims 5 to 12,
**characterized in that** the tempering vessel (30, 30', 71) is adjacent to a reaction vessel (20, 20', 70) for at least a partial reaction of the hydrothermal carbonization, especially for a first partial reaction, for a second partial reaction and/or for the whole hydrothermal carbonization, so that the tempering device (10, 10') tempers the partial reaction, especially the first and/or the second partial reaction and/or the whole hydrothermal carbonization.

14. Carbonization plant (60) according to claim 13 **characterized in that** the heat of reaction of the first partial reaction can be partially made available for the second partial reaction via the tempering substance and/or via the tempering liquid so that a required reaction temperature for the second partial reaction can be met.

15. Carbonization plant (60) according to one of the claims 13 or 14 **characterized in that** the carbonization plant (60) comprises a heat exchanger (63), wherein at least a part of the process mass having left a last reaction vessel (70) heats the process mass before entering the first reaction vessel (20, 20') in the heat exchanger (63).

## Revendications

1. Procédé de thermorégulation d'une réaction exothermique, en particulier d'au moins une réaction partielle d'une carbonisation hydrothermale,
laquelle réaction exothermique est réalisée dans un récipient de réaction (20, 20', 70), un mélange de réaction se soumettant à la réaction exothermique se trouvant en tant que masse de processus dans le récipient de réaction, et
la température de la réaction exothermique étant régulée au moins partiellement par au moins une substance de thermorégulation qui est disposée dans un récipient de thermorégulation (30, 30', 71),
de la chaleur pouvant être échangée entre la substance de thermorégulation et au moins un liquide de thermorégulation séparé matériellement de la substance de thermorégulation,
**caractérisé en ce**
**qu'**un récipient de liquide (40, 40', 72) qui contient le liquide de thermorégulation est contigu au récipient de thermorégulation (30, 30', 71),
la substance de thermorégulation effectuant au moins partiellement une transition de phase entre une phase solide (33, 33') et une phase liquide (32, 32') de la substance de thermorégulation lors d'un transfert de chaleur entre le récipient de réaction (20, 20', 70) et la substance de thermorégulation.

2. Procédé selon la revendication 1,
**caractérisé en ce**
**que** la substance de thermorégulation fond au moins partiellement lors de l'absorption de chaleur de réaction de la réaction exothermique.

3. Procédé selon la revendication 1,
**caractérisé en ce**
**que** la chaleur de fusion contenue dans la substance de thermorégulation liquide est utilisée pour apporter de la chaleur au récipient de réaction (20, 20', 70), en particulier pour chauffer au moins un éduit de la réaction exothermique avant le début de la réaction exothermique, la substance de thermorégulation se solidifiant au moins partiellement.

4. Procédé selon une des revendications précédentes,
**caractérisé en ce**
**que** la réaction exothermique est une première réaction partielle de la carbonisation hydrothermale, la chaleur de réaction de la première réaction partielle étant mise à la disposition d'une deuxième réaction partielle de la carbonisation hydrothermale pour maintenir constante la température de la deuxième réaction partielle.

5. Dispositif de thermorégulation (10, 10') pour réguler la température d'une réaction exothermique, en particulier d'au moins une réaction partielle d'une carbonisation hydrothermale,
le dispositif de thermorégulation (10, 10') présentant un récipient de réaction (20, 20', 70) dans lequel la réaction exothermique peut être réalisée à une température de réaction et dans lequel se trouve un mélange de réaction se soumettant à la réaction exothermique tant que masse de processus, au moins un récipient de thermorégulation (30, 30', 71), dans lequel est disposée au moins une substance de thermorégulation, et au moins un récipient de liquide (40, 40', 72) qui contient un liquide de thermorégulation,
le point de fusion de la substance de thermorégulation se situant dans la plage de température de la température de réaction,
**caractérisé en ce**
**que** le récipient de thermorégulation (30, 30', 71) est contigu au récipient de réaction (20, 20', 70), de sorte que la substance de thermorégulation sert à réguler la température de la réaction exothermique, et le récipient de liquide (40, 40', 72) est contigu au récipient de thermorégulation (30, 30', 71).

6. Dispositif de thermorégulation (10, 10') selon la revendication 5,
**caractérisé en ce**
**que** le point de fusion de la substance de thermorégulation se situe à moins de 50 °C, de préférence à moins de 25 °C et particulièrement de préférence à moins de 10 °C au-dessous de la température de réaction de la réaction exothermique.

7. Dispositif de thermorégulation (10, 10') selon la revendication 5 ou 6,
**caractérisé en ce**
**que** la substance de thermorégulation est disposée entre le récipient de réaction (20, 20', 70) et le liquide de thermorégulation, de sorte qu'une chaleur de réaction de la réaction exothermique peut être transférée au liquide de thermorégulation seulement par l'intermédiaire de la substance de thermorégulation.

8. Dispositif de thermorégulation (10, 10') selon une des revendications 5 à 7,
**caractérisé en ce**
**que** le dispositif de thermorégulation (10, 10') présente une unité de commande et/ou de régulation (90) qui règle le transfert de chaleur entre liquide de thermorégulation et substance de thermorégulation de façon que la substance de thermorégulation soit présente en même temps à la fois dans la phase liquide (32, 32') et dans la phase solide (33, 33') pendant la réaction exothermique.

9. Dispositif de thermorégulation (10, 10') selon une des revendications 5 à 8,
**caractérisé en ce**
**que** des premières et/ou deuxièmes ailettes de refroidissement (34, 35, 35') sont disposées dans le récipient de thermorégulation (30, 30', 71), de sorte que le transfert de chaleur entre le récipient de réaction (20, 20', 70) et la substance de thermorégulation et/ou le transfert de chaleur entre la substance de thermorégulation et le récipient de liquide (40, 40',72) est augmenté.

10. Dispositif de thermorégulation (10, 10') selon une des revendications 5 à 9,
**caractérisé en ce**
**que** le dispositif de thermorégulation (10, 10') présente un premier dispositif de vibration (26), de sorte que la masse de processus est mélangée par les vibrations produites avec le premier dispositif de vibration (26) et/ou que le dispositif de thermorégulation présente un deuxième dispositif de vibration (26), de sorte que la substance de thermorégulation liquide est mélangée par les vibrations produites avec le deuxième dispositif de vibration (26).

11. Dispositif de thermorégulation (10, 10') selon une des revendications 5 à 10,
**caractérisé en ce**
**qu'**un réservoir sous pression (50, 50', 50") entoure le récipient de thermorégulation (30, 30', 71), le récipient de réaction (20, 20', 70) et le récipient de liquide (40, 40', 72), le réservoir sous pression (50, 50', 50") étant en particulier séparé des récipients (20, 20', 30, 30', 40, 40', 70, 71, 72) par une couche isolante (51).

12. Dispositif de thermorégulation (10, 10') selon une des revendications 5 à 11,
**caractérisé en ce**
**que** le récipient de réaction (20, 20', 70) est construit de façon que la réaction exothermique soit réalisable en plusieurs paliers et/ou en continu, le récipient de réaction (20, 20', 70) étant en particulier une cascade et/ou un réacteur tubulaire, différents paliers et/ou différentes sections du récipient de réaction (20, 20', 70) étant en particulier entourés de différentes substances de thermorégulation.

13. Installation de carbonisation (60) avec un dispositif de thermorégulation (10, 10') selon une des revendications 5 à 12,
**caractérisé en ce**
**que** le récipient de thermorégulation (30, 30', 71) est contigu à un récipient de réaction (20, 20', 70) au moins pour une réaction partielle de la carbonisation hydrothermale, en particulier pour une première réaction partielle, pour une deuxième réaction partielle et/ou pour la carbonisation hydrothermale totale, de sorte que le dispositif de thermorégulation (10, 10') régule la température de la réaction partielle, en particulier de la première et/ou deuxième réaction partielle et/ou de la carbonisation hydrothermale totale.

14. Installation de carbonisation (60) selon la revendication 13,
**caractérisé en ce**
**que** la chaleur de réaction de la première réaction partielle peut être mise à disposition partiellement pour la deuxième réaction partielle par la substance de thermorégulation et/ou par le liquide de thermorégulation, de façon qu'une température de réaction nécessaire pour la deuxième réaction partielle puisse être respectée.

15. Installation de carbonisation (60) selon une des revendications 13 ou 14,
**caractérisé en ce**
**que** l'installation de carbonisation (60) présente un échangeur de chaleur (63) dans lequel au moins une partie de la masse de processus après la sortie d'un dernier récipient de réaction (70) chauffe la masse de processus avant l'entrée dans le premier récipient de réaction (20, 20').
